# EUROPEAN PATENT SPECIFICATION

(11) **EP 4 133 880 B1**
(45) Date of publication and mention of the grant of the patent: **01.10.2025**
(21) Application number: 21718783.0
(22) Date of filing: 25.03.2021
(51) Int. Cl.: H04W 74/0833, H04L 5/00

(54) **FALLBACK PROCEDURE ON A RANDOM ACCESS CHANNEL**
FALLBACK-VERFAHREN AUF EINEM KANAL MIT WAHLFREIEM ZUGRIFF
PROCÉDURE DE REPLI SUR UN CANAL D'ACCÈS ALÉATOIRE

(30) Priority: 08.04.2020 US 202063007242 P; 24.03.2021 US 202117211548
(43) Date of publication of application: 15.02.2023
(73) Proprietor: QUALCOMM Incorporated, San Diego, CA 92121-1714 (US)
(72) Inventor: TAHERZADEH BOROUJENI, Mahmoud, San Diego, California 92121-1714 (US); LUO, Tao, San Diego, California 92121-1714 (US); GAAL, Peter, San Diego, California 92121-1714 (US); SUN, Jing, San Diego, California 92121-1714 (US); ZHANG, Xiaoxia, San Diego, California 92121-1714 (US); MONTOJO, Juan, San Diego, California 92121-1714 (US); DAMNJANOVIC, Jelena, San Diego, California 92121-1714 (US); SAKHNINI, Iyab Issam, San Diego, California 92121-1714 (US); LI, Junyi, San Diego, California 92121-1714 (US)
(74) Representative: Reddie & Grose LLP
(86) International application number: PCT/US2021/024157
(87) International publication number: WO 2021/206924

(56) References cited:
- EP-A1- 3 528 582
- EP-A1- 3 562 252
- QUALCOMM INCORPORATED: "Procedures for Two-Step RACH", vol. RAN WG1, no. Xi'an, China; 20190408 - 20190412, 7 April 2019 (2019-04-07), XP051700108, Retrieved from the Internet <URL:http://www.3gpp.org/ftp/Meetings%5F3GPP%5FSYNC/RAN1/Docs/R1%2D1904993%2Ezip> [retrieved on 20190407]

## Description

### BACKGROUND

### Technical Field

The present disclosure generally relates to communication systems, and more particularly, to random access procedures in access networks or other wireless networks.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies. EP 3 562 252 A1 describes a random access preamble sending method and apparatus. The method includes sending, by user equipment, a first random access preamble to a network device, where the first random access preamble is used by the user equipment to access the network device; and when the user equipment fails in accessing the network device by using the first random access preamble, sending at least one second random access preamble to the network device, where access characteristic information of each second random access preamble is different from that of the first random access preamble, the access characteristic information includes at least one of a time length, a transmit beam, and a random access resource, and the at least one second random access preamble is used by the user equipment to access the network device. In the embodiments of the present invention, a problem of a random access failure in a future wireless communications network caused by the fact that a random access preamble does not arrive at the network device is resolved, thereby increasing a probability that the random access preamble arrives at the network device and increasing a random access success rate.
EP 3 528 582 A1 describes systems, apparatuses, and methods for wireless communications wherein a base station may configure a plurality of random access configurations for a wireless device on different uplink carriers, such as a supplemental uplink carrier and a non-supplemental uplink carrier. The wireless device may fall back to a second uplink carrier if a random access procedure fails on the first uplink carrier.
"Procedures for Two-Step RACH", vol. RAN WG1, no. Xi' an, China; 20190408 - 20190412, (20190407), 3GPP DRAFT; R1-1904993 PROCEDURES FOR TWO-STEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE describes procedures for two-step RACH.

### SUMMARY

The scope of the present invention is defined by the scope of the appended claims. Any embodiments which do not fall within the scope of the claims are examples which are helpful for understanding the invention, but do not form a part of the present invention.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of downlink channels within a subframe, in accordance with various aspects of the present disclosure.
FIG. 2C is a diagram illustrating an example of a second frame, in accordance with various aspects of the present disclosure.
FIG. 2D is a diagram illustrating an example of uplink channels within a subframe, in accordance with various aspects of the present disclosure.
FIG. 3 is a diagram illustrating an example of a base station and user equipment (UE) in an access network.
FIG. 4 is a call flow diagram illustrating example operations in a wireless communications network.
FIG. 5 is a block diagram illustrating random access channel (RACH) occasions for an example RACH procedure.
FIG. 6 is a block diagram illustrating monitoring occasions for an example RACH procedure.
FIG. 7 is a block diagram illustrating preamble transmissions and random access response (RAR) windows in an example RACH procedure.
FIG. 8 is a flowchart of a method of wireless communication by a UE.
FIG. 9 is a flowchart of a method of wireless communication by a base station.
FIG. 10 is a diagram illustrating an example of a hardware implementation for an example apparatus.
FIG. 11 is a diagram illustrating another example of a hardware implementation for another example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, computer-executable code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or computer-executable code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer-executable code in the form of instructions or data structures that can be accessed by a computer.

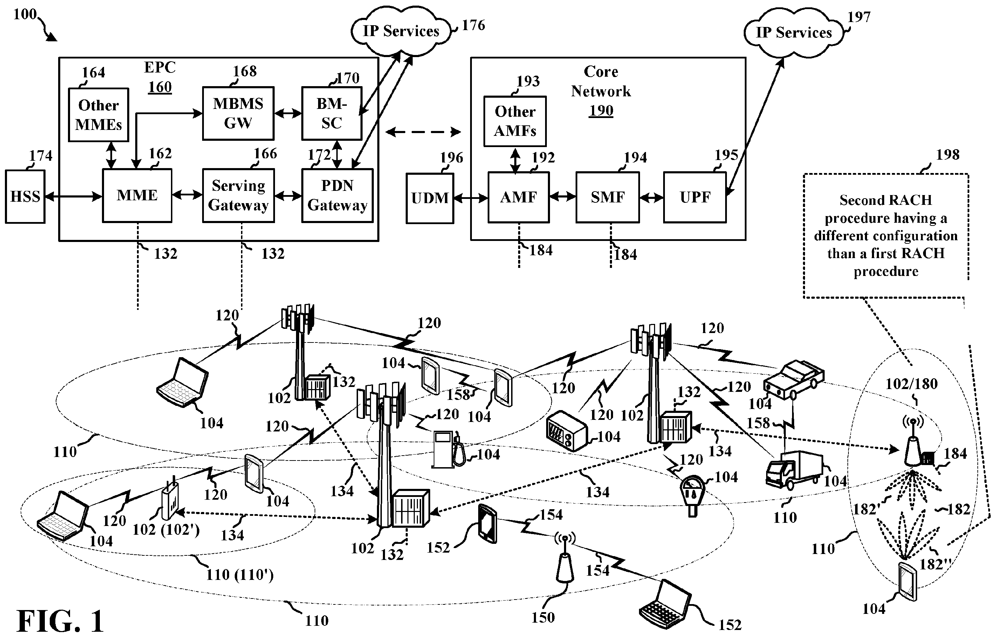

FIG. 1 is a diagram illustrating an example of a wireless communications system and an access network 100. The wireless communications system (also referred to as a wireless wide area network (WWAN)) includes base stations 102, user equipment(s) (UE) 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G Long Term Evolution (LTE) (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G New Radio (NR), which may be collectively referred to as Next Generation radio access network (RAN) (NG-RAN), may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for nonaccess stratum (NAS) messages, NAS node selection, synchronization, RAN sharing, Multimedia Broadcast Multicast Service (MBMS), subscriber and equipment trace, RAN information management (RIM), paging, positioning, and delivery of warning messages.

In some aspects, the base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless. At least some of the base stations 102 may be configured for integrated access and backhaul (IAB). Accordingly, such base stations may wirelessly communicate with other such base stations. For example, at least some of the base stations 102 configured for IAB may have a split architecture that includes at least one of a central unit (CU), a distributed unit (DU), a radio unit (RU), a remote radio head (RRH), and/or a remote unit, some or all of which may be collocated or distributed and/or may communicate with one another. In some configurations of such a split architecture, the CU may implement some or all functionality of a radio resource control (RRC) layer, whereas the DU may implement some or all of the functionality of an radio link control (RLC) layer.

Illustratively, some of the base stations 102 configured for IAB may communicate through a respective CU with a DU of an IAB donor node or other parent IAB node (e.g., a base station), further, may communicate through a respective DU with child IAB nodes (e.g., other base stations) and/or one or more of the UEs 104. One or more of the base stations 102 configured for IAB may be an IAB donor connected through a CU with at least one of the EPC 160 and/or the core network 190. In so doing, the base station(s) 102 operating as an IAB donor(s) may provide a link to the one of the EPC 160 and/or the core network 190 for other IAB nodes, which may be directly or indirectly (e.g., separated from an IAB donor by more than one hop) and/or one or more of the UEs 104, both of which may have communicate with a DU(s) of the IAB donor(s). In some additional aspects, one or more of the base stations 102 may be configured with connectivity in an open RAN (ORAN) and/or a virtualized RAN (VRAN), which may be enabled through at least one respective CU, DU, RU, RRH, and/or remote unit.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (also referred to as reverse link) transmissions from a UE 104 to a base station 102 and/or downlink (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* megahertz (MHz) (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to downlink and uplink (e.g., more or fewer carriers may be allocated for downlink than for uplink). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the downlink/uplink WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 gigahertz (GHz) unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, an MBMS Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a Packet Switch (PS) Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides Quality of Service (QoS) flow and session management. All user IP packets are transferred through the UPF 195. The UPF 195 provides UE IP address allocation as well as other functions. The UPF 195 is connected to the IP Services 197. The IP Services 197 may include the Internet, an intranet, an IMS, a PS Streaming Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, a UE 104 may be configured to determine that a first random access channel (RACH) procedure with a base station 102/180 is unsuccessful. For example, the first RACH procedure may be a default or initially selected RACH procedure, which the UE 104 may regard as unsuccessful if the channel conditions with a base station 102/180 are poor and/or if the UE 104 fails to receive a random access response (RAR) message responsive to a preamble message transmitted to the base station 102/180 for the first RACH procedure. The UE 104 may be further configured to transmit, after determining that the first RACH procedure is unsuccessful, a preamble message for a second RACH procedure 198 with the base station. A second configuration for the second RACH procedure 198 may be different from a first configuration for the first RACH procedure.

Correspondingly, the base station 102/180 may be configured to receive a preamble message from the UE 104 for the second RACH procedure 198 having the second configuration different from the first configuration for the first RACH procedure. The base station 102/180 may be further configured to determine that the first RACH procedure with the UE is unsuccessful. For example, the base station 102/180 may receive at least one measurement from the UE 104, which may indicate that the channel conditions are poor, and so the second RACH procedure 198 may be performed. In another example, the base station 102/180 may receive the preamble message for the second RACH procedure 198 from the UE 104. The base station 102/180 may determine that the first RACH procedure is unsuccessful based on the preamble message for the second RACH procedure 198 being different than a preamble message for the first RACH procedure that the base station 102/180 may have been expecting. According to the various aspects described herein, the base station 102/180 may determine that the first RACH procedure has failed either before reception of the preamble message for the second RACH procedure 198 or after reception of the preamble message for the second RACH procedure 198.

Although the present disclosure may focus on 5G NR, the concepts and various aspects described herein may be applicable to other similar areas, such as LTE, LTE-Advanced (LTE-A), Code Division Multiple Access (CDMA), Global System for Mobile communications (GSM), or other wireless/radio access technologies.

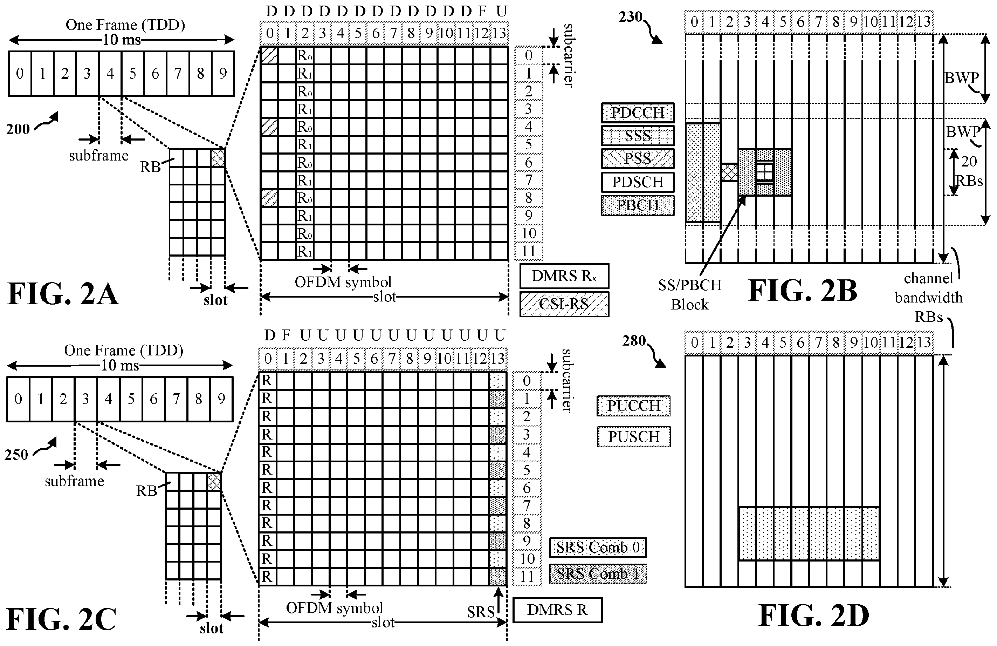

FIG. 2A is a diagram 200 illustrating an example of a first subframe within a 5G NR frame structure. FIG. 2B is a diagram 230 illustrating an example of downlink channels within a 5G NR subframe. FIG. 2C is a diagram 250 illustrating an example of a second subframe within a 5G NR frame structure. FIG. 2D is a diagram 280 illustrating an example of uplink channels within a 5G NR subframe. The 5G NR frame structure may be frequency division duplexed (FDD) in which for a particular set of subcarriers (carrier system bandwidth), subframes within the set of subcarriers are dedicated for either downlink or uplink, or may be time division duplexed (TDD) in which for a particular set of subcarriers (carrier system bandwidth), subframes within the set of subcarriers are dedicated for both downlink and uplink. In the examples provided by FIGs. 2A, 2C, the 5G NR frame structure is assumed to be TDD, with subframe 4 being configured with slot format 28 (with mostly downlink), where D is downlink, U is uplink, and F is flexible for use between downlink/uplink, and subframe 3 being configured with slot format 34 (with mostly uplink). While subframes 3, 4 are shown with slot formats 34, 28, respectively, any particular subframe may be configured with any of the various available slot formats 0-61. Slot formats 0, 1 are all downlink, uplink, respectively. Other slot formats 2-61 include a mix of downlink, uplink, and flexible symbols. UEs are configured with the slot format (dynamically through downlink control information (DCI), or semi-statically/statically through RRC signaling) through a received slot format indicator (SFI). Note that the description *infra* applies also to a 5G NR frame structure that is TDD.

Other wireless communication technologies may have a different frame structure and/or different channels. A frame, e.g., of 10 milliseconds (ms), may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on downlink may be cyclic prefix (CP) orthogonal frequency-division multiplexing (OFDM) (CP-OFDM) symbols. The symbols on uplink may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* _{*} 15 kilohertz (kHz), where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of slot configuration 0 with 14 symbols per slot and numerology µ=2 with 4 slots per subframe. The slot duration is 0.25 ms, the subcarrier spacing is 60 kHz, and the symbol duration is approximately 16.67 microseconds (µs). Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry at least one pilot and/or reference signal (RS) for the UE. In some configurations, an RS may include at least one demodulation RS (DM-RS) (indicated as Rₓ for one particular configuration, where 100x is the port number, but other DM-RS configurations are possible) and/or at least one channel state information (CSI) RS (CSI-RS) for channel estimation at the UE. In some other configurations, an RS may additionally or alternatively include at least one beam measurement (or management) RS (BRS), at least one beam refinement RS (BRRS), and/or at least one phase tracking RS (PT-RS).

FIG. 2B illustrates an example of various downlink channels within a subframe of a frame. The physical downlink control channel (PDCCH) carries DCI within one or more control channel elements (CCEs), each CCE including nine RE groups (REGs), each REG including four consecutive REs in an OFDM symbol. A PDCCH within one BWP may be referred to as a control resource set (CORESET). Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequencydependent scheduling on the uplink.

FIG. 2D illustrates an example of various uplink channels within a subframe of a frame. The PUCCH may be located as indicated in one configuration. The PUCCH carries uplink control information (UCI), such as scheduling requests (SRs), a channel quality indicator (CQI), a precoding matrix indicator (PMI), a rank indicator (RI), and hybrid automatic repeat request (HARQ) acknowledgement (ACK) / nonacknowledgement (NACK) feedback. The PUSCH carries data, and may additionally be used to carry a buffer status report (BSR), a power headroom report (PHR), and/or UCI.

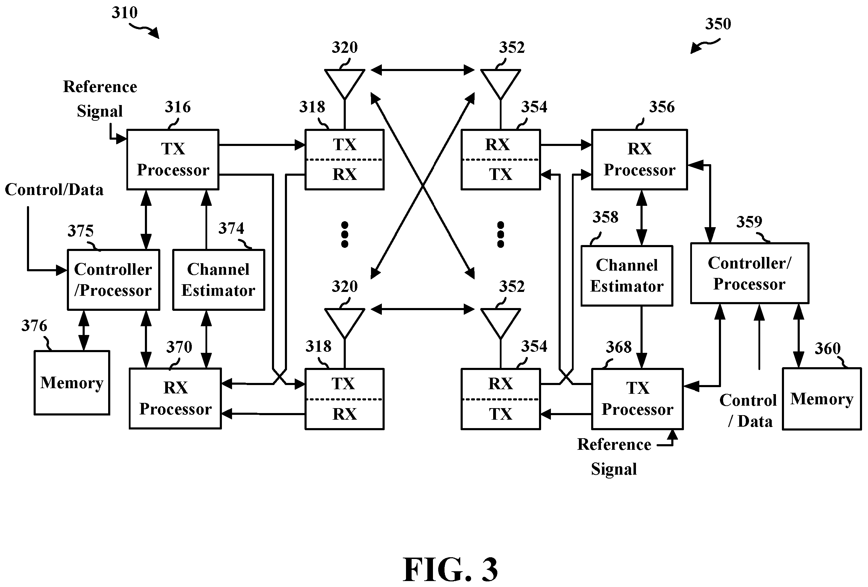

FIG. 3 is a block diagram of a base station 310 in communication with a UE 350 in an access network. In the downlink, IP packets from the EPC 160 may be provided to a controller/processor 375. The controller/processor 375 implements Layer 2 (L2) and Layer 3 (L3) functionality. L3 includes an RRC layer, and L2 includes a service data adaptation protocol (SDAP) layer, a packet data convergence protocol (PDCP) layer, an RLC layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement Layer 1 (L1) functionality associated with various signal processing functions. L1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate a radio frequency (RF) carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement L1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements L3 and L2 functionality.

The controller/processor 359 can be associated with a memory 360 that stores program codes and data. The memory 360 may be referred to as a computer-readable medium. In the uplink, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the downlink transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The uplink transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the uplink, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

In some aspects, at least one of the TX processor 368, the RX processor 356, and the controller/processor 359 may be configured to perform aspects in connection with the second RACH procedure 198 of FIG. 1.

In some other aspects, at least one of the TX processor 316, the RX processor 370, and the controller/processor 375 may be configured to perform aspects in connection with the second RACH procedure 198 of FIG. 1.

According to various RATs, a random access or RACH procedure may be performed, for example, in order for a UE to acquire uplink timing synchronization and/or an uplink grant with a base station. Different conditions may cause the UE to perform a RACH procedure with a base station. For example, a UE may perform a RACH procedure during initial access to a cell provided by a base station, handover to the cell, reacquisition of uplink timing synchronization, etc.

A RACH procedure may include the exchange of messages between a UE and a base station. For example, one type of RACH procedure may include the exchange of four messages between the UE and the base station, and may be referred to as a "four-step RACH procedure." The present disclosure describes various concepts and aspects in the context of such a four-step RACH procedure; however, one of ordinary skill will appreciate that the various concepts and aspects described herein may be practiced with other random access or RACH procedures, including a "two-step" RACH procedure in which a MsgA is first transmitted by a UE and then a MsgB is transmitted by a base station in response. For example, the MsgA may incorporate some or all of the various concepts and aspects described herein with respect to a preamble message or msg1, and the MsgB may incorporate some or all of the various concepts and aspects described herein with respect to an RAR message or msg2.

A four-step RACH procedure for initial access by a UE may begin with acquisition by the UE of at least one pilot signal (e.g., SSB, another synchronization signal, another reference signal, etc.) and system information (e.g., at least one SIB). For example, a base station may broadcast each of the SSBs and SIBs in the coverage area of the base station, e.g., periodically on a known channel so that the UE may acquire information to establish communication with the base station. In particular, the UE may obtain various parameters associated with initial access from the at least one SIB, and further, the UE may obtain information applicable to directional beamforming or resource selection from the at least one SSB.

Based on the initial access-associated parameters, the UE may transmit a preamble message to the base station, such as by selecting a RACH occasion and transmitting the preamble message in the selected RACH occasion. The preamble message may also be referred to as a "msg1" and/or a physical RACH (PRACH) message in the four-step RACH procedure. The UE may expect to receive a RAR message from the base station in response to the preamble message.

In particular, the UE may monitor for the RAR message in an RAR window. The duration of the RAR window may be configured for the UE through the initial access parameters. If the UE fails to receive the RAR message in the RAR window, the UE may retransmit the preamble message with a higher transmit power, e.g., according to a power ramping step indicated by the initial access parameters.

When the base station receives the preamble message, the base station may generate and respond with the RAR message. The RAR message may be also referred to as a "msg2" in the four-step RACH procedure. The RAR message may include control information and/or data, e.g., on a PDCCH and a PDSCH, respectively.

In some aspects, the base station may scramble the control information on the PDCCH (e.g., DCI) with a random access (RA) radio network temporary identifier (RNTI) based on the RACH occasion in which the UE transmitted the preamble message. With respect to the content of the PDSCH, the base station may include acknowledgement feedback in a MAC control element (CE) in order to acknowledge reception of the preamble message. In addition, the base station may include an uplink grant on the PDSCH of the RAR message.

In monitoring for the RAR message during the RAR window, the UE may monitor for DCI (e.g., DCI format 1_0) on the PDCCH that is scrambled with the RA-RNTI corresponding to the RACH occasion in which the UE transmitted the preamble message. When the UE detects such DCI, the UE may detect and decode the associated content on the PDSCH. If the UE identifies the acknowledgement feedback in the MAC CE corresponding to the preamble message transmitted by the UE, the UE may determine that the uplink grant carried on the PDSCH is intended for the UE.

Based on the uplink grant, the UE may transmit a connection request message. The connection request message may also be known as a "msg3" in the four-step RACH procedure. The UE may include an identifier (ID) of the UE in the connection request message. The base station may receive the connection request message from the UE and, in response, may perform contention resolution.

Potentially, contention resolution may cause the four-step RACH procedure to fail for the UE. For example, if multiple UEs select the same preamble sequence to include in respective preamble messages and transmit those respective preamble messages in the same RACH occasion, a collision may result at the base station, which may cause contention resolution, and the four-step RACH procedure, to fail for at least one of the multiple UEs. In another example, preamble messages may interfere with one another when transmitted on the same resource from multiple UEs, which may also cause contention resolution and the four-step RACH procedure to fail for at least one of the multiple UEs.

Based on the result of the contention resolution, the base station may generate and send a contention resolution message to the UE. The contention resolution message may also be known as a "msg4" in the four-step RACH procedure. The UE may receive the contention resolution message and, as the four-step RACH procedure for cell access may be successfully completed (e.g., potentially after the UE transmits acknowledgement feedback to the base station based on the contention resolution message), may camp on the cell and/or communicate with the base station.

In addition to the aforementioned potential failures of four-step RACH procedures, four-step RACH procedures may incur an appreciable amount of time and/or signaling overhead. For example, preamble message transmission and RAR message transmission may cause congestion and/or interference in millimeter wave (mmW) systems, such as in 5G New Radio (NR) mmW networks, which may adversely affect coverage. In view of the foregoing, a need exists for approaches to increase the coverage and recover from other failures that result from four-step RACH procedures.

The present disclosure provides various techniques and solutions to increase the coverage and recover from other failures in four-step RACH procedures. Specifically, the present disclosure provides for alternative four-step RACH procedures, e.g., in which one or more of the aforementioned message exchanges of a four-step RACH procedure has a different configuration from a first RACH procedure, such as an initial RACH procedure or a default RACH procedure. In some aspects of the present disclosure, for example, an alternative four-step RACH procedure described herein may increase coverage through PRACH repetition and/or using different PRACH formats. Such PRACH repetition and/or different PRACH formats may improve beam refinement at a base station, which may improve coverage when the base station transmits RAR messages and/or other messages (e.g., contention resolution messages). In some other aspects, an alternative four-step RACH procedure described herein may increase coverage through repetition of at least a portion of RAR messages, such as repetition of DCI on a PDCCH of an RAR message.

As some aspects of alternative four-step RACH procedures may include repetition of various messages, additional PRACH resources may be consumed beyond of other (conventional) four-step RACH procedures. Thus, the present disclosure describes techniques and solutions to identifying those UEs that may benefit from PRACH coverage enhancements so that unnecessary usage of PRACH resources may be mitigated.

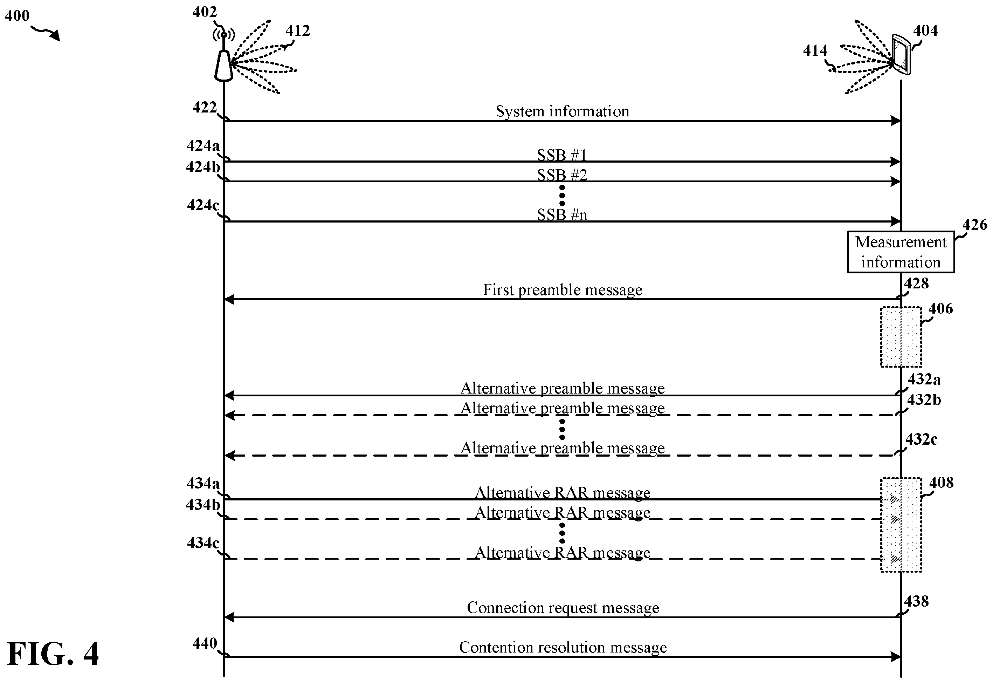

FIG. 4 is a call flow diagram of various operations in an example wireless communications system 400. The example wireless communications system 400 may include, *inter alia,* a base station 402 and a UE 404. The base station 402, for example, may be implemented as the base station 102/180 of FIG. 1 and/or the base station 310 of FIG. 3. The UE 404, for example, may be implemented as the UE 104 of FIG. 1 and/or the UE 350 of FIG. 3.

The base station 402 may provide a cell (e.g., coverage area 110 of FIG. 1), which the UE 404 may enter. In the cell, the base station 402 may transmit (e.g., broadcast), and the UE 404 may receive, system information 422. In some aspects, system information 422 may include one or more SIBs, such as a SIB1. In some other aspects, system information 422 may include remaining minimum system information (RMSI) and/or other system information (OSI) - e.g., a SIB1 may carry some or all RMSI, and one or more of SIB2 through SIB9 may carry some or all OSI.

System information 422 may include information associated with cell access, such as initial access parameters, and/or other information associated with establishing a connection and communicating with the base station 402. In some aspects, system information 422 may include initial access parameters and, in particular, parameters for four-step RACH procedures. Potentially, system information 422 may include information associated with at least two four-step RACH procedures: an initial four-step RACH procedure, which the UE 404 is to initially or conventionally attempt with the base station 402, and at least one alternative RACH procedure, which the UE 404 may attempt when the initial four-step RACH procedure fails and/or when conditions of the channel on which the UE 404 communicates with the base station 402 are poor.

For example, system information 422 may include, *inter alia,* RMSI and/or other information that indicates a subset of PRACH sequences that are to be used by the UE 404 for an alternative four-step RACH procedure. In another example, system information 422 may include RMSI and/or other information that indicates a first length of a first RAR window 406 used for the initial four-step RACH procedure, and further indicates a second length of a second RAR window 408 used for the alternative four-step RACH procedure.

Additionally, the base station 402 may broadcast each of a set of SSBs 424a-c on a respective one of a set of beams 412. Thus, each of the SSBs 424a-c may be transmitted via a corresponding one of the base station beams 412. The UE 404 may receive, via at least one of UE beams 414, each of the SSBs 424a-c transmitted via a corresponding one of the base station beams 412. The UE 404 may identify which of the base station beams 412 a corresponding one of the SSBs 424a-c is transmitted based on receiving each of the SSBs 424a-c.

In receiving each of the SSBs 424a-c, the UE 404 may determine (e.g., measure) measurement information 426, which may include one or more values indicative of a respective quality and/or power associated with each of the beams 412 via which one of the SSBs 424a-c is respectively transmitted. For example, the UE 404 may determine (e.g., measure), for the measurement information 426, a reference signal receive power (RSRP), a reference signal receive quality (RSRQ), a signal-to-noise ratio (SNR), and/or a reference signal strength indicator (RSSI) respectively corresponding to each of the SSBs 424a-c received by the UE 404.

According to various aspects, the UE 404 may perform a four-step RACH procedure, e.g., in order to initially access the cell provided by the base station 402, obtain uplink synchronization with the base station 402, obtain an uplink grant from the base station 402, etc. In one aspect, the UE 404 may determine whether to perform a first (e.g., conventional) four-step RACH procedure or an alternative four-step RACH procedure, e.g., as described herein. For example, the UE 404 may compare the measurement information 426 (e.g., the RSRP) for at least one SSB to a threshold, such as a preconfigured threshold or a threshold indicated in the system information 422. If the UE 404 determines that the measurement information 426 satisfies (e.g., meets or exceeds) the threshold, then the UE 404 may determine that the UE 404 is to perform the first (e.g., conventional) four-step RACH procedure. However, if the UE 404 determines that the measurement information 426 fails to satisfy (e.g., is less than) the threshold, then the UE 404 may determine that the UE 404 is to perform the alternative four-step RACH procedure.

When the UE 404 determines to perform the first four-step RACH procedure, the UE 404 may generate and transmit a first preamble message 428. The UE 404 may determine a preamble sequence to include in the first preamble message 428, e.g., based on the system information 422. For example, the UE 404 may generate a preamble sequence from a set of available preamble sequences based on the system information 422.

If the base station 402 successfully receives the first preamble message 428, the base station 402 may generate and transmit a first RAR message to the UE 404. The UE 404 may receive the first RAR message from the base station 402 in a first RAR window 406 configured for the first four-step RACH procedure. The UE 404 may then generate and transmit to the base station 402 a connection request message. Based on successfully receiving the connection request message from the UE 404, the base station 402 may generate and transmit to the UE 404 a contention resolution message. Accordingly, the base station 402 and the UE 404 may successfully complete the first (e.g., conventional) four-step RACH procedure.

However, when the UE 404 determines that the first four-step RACH procedure is unsuccessful, then the UE 404 may determine to perform an alternative four-step RACH procedure. For example, if the UE 404 does not receive a first RAR message in the first RAR window 406, then the UE 404 may determine that the first four-step RACH procedure is unsuccessful. In another example, if the measurement information 426 fails to satisfy the threshold, then the UE 404 may determine that the first four-step RACH procedure would likely be unsuccessful, and therefore, the UE 404 should perform the alternative four-step RACH procedure.

The alternative four-step RACH procedure may be performed based on a respective configuration of at least one of: an alternative preamble message different from the first preamble message, transmission of the alternative preamble message, detection of an alternative RAR message different from the first RAR message, reception of the second RAR message, an alternative RAR window 408 different from the first RAR window 406, a second size of alternative DCI carried in the alternative RAR message different from a first size of first DCI configured for the first RAR message, alternative content of the alternative DCI different from first content configured for the first DCI, transmission of an alternative connection request message different from a first connection request message configured for the first RACH procedure, detection of an alternative contention resolution message different from a first contention resolution message configured for the first RACH procedure, and/or reception of the second contention resolution message.

In performing the alternative four-step RACH procedure, the UE 404 may generate at least one alternative preamble message 432a, which may include a PRACH preamble. In one aspect, the respective configuration of the at least one alternative preamble message 432a includes at least one of a subset of a set of sequences for preamble generation and/or a second preamble format that is different from a first preamble format configured for the first preamble message 428. For example, the subset of the set of sequences for preamble generation may be indicated in the system information 422 (e.g., in RMSI).

The UE 404 may then transmit the at least one alternative preamble message 432a to the base station 402. In one aspect, the respective configuration of the transmission of the at least one alternative preamble message 432a may include a second transmit power for the transmission of the at least one alternative preamble message 432a that is higher than a first transmit power configured for the first preamble message 428. To transmit the at least one alternative preamble message 432a, the UE 404 may select at least one RACH occasion. In one aspect, the respective configuration of the transmission of the at least one alternative preamble message 432a may include a subset of the set of RACH occasions available for preamble transmission.

According to some aspects, the UE 404 may transmit multiple alternative preamble messages 432a-c. Potentially, the UE 404 may transmit the measurement information 426 to the base station 402, e.g., in at least one of the alternative preamble messages 432a-c. For example, the base station 402 may receive the measurement information 426 and, based thereon, may determine that the alternative four-step RACH procedure is to be performed with the UE 404 (e.g., if the measurement information 426 fails to satisfy the threshold).

In some aspects, the multiple alternative preamble messages 432a-c may be repetitions of one alternative preamble message. In some other aspects, the multiple alternative preamble messages 432a-c may be linked together. For example, the multiple alternative preamble messages 432a-c may be linked together according to a preconfigured respective configuration (e.g., as defined by a standard promulgated by 3GPP or other standards body) and/or according to configuration by the base station 402.

The multiple alternative preamble messages 432a-c may be transmitted over multiple RACH occasions associated with the same one of the base station beams 412 via which one of the SSBs 424a-c was received, e.g., based on the measurement information 426. RACH occasions corresponding to the same one of the base station beams 412 via which one of the SSBs 424a-c was received may be grouped into groups of *k* consecutive RACH occasions in time, and each group may function as one RACH occasions for the multiple alternative preamble messages 432a-c.

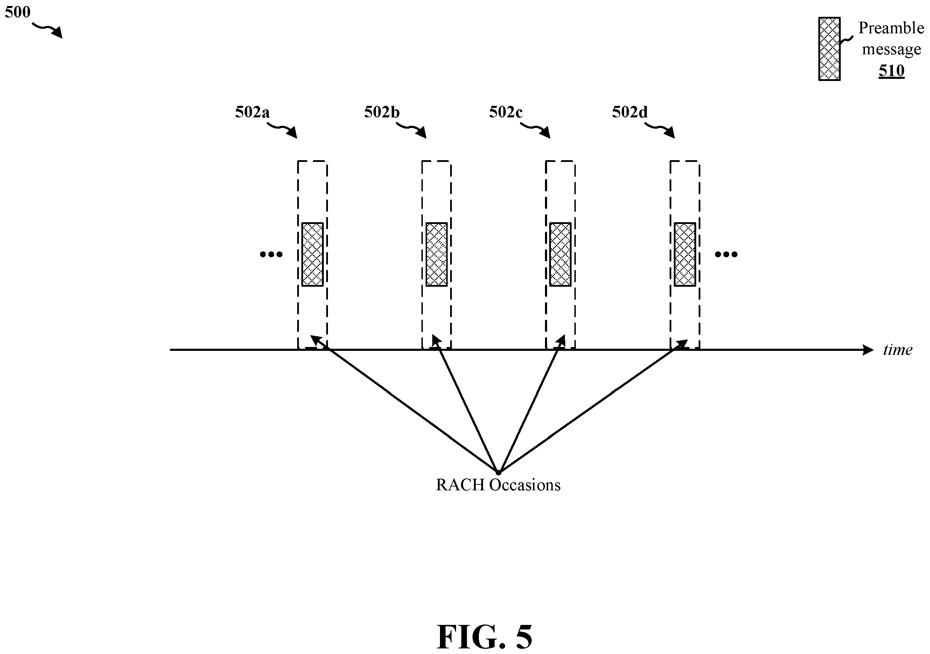

Referring to FIG. 5, an example preamble transmission 500 is shown. A RACH preamble may be transmitted in a RACH occasion, such as one or more of the RACH occasions 502a-d, which may also be referred to as preamble transmission occasions or simply transmission occasions. Each of the RACH occasions 502a-d may correspond to the same one of the SSBs 424a-c and/or to the same one of the base station beams 412 via which one of the SSBs 424a-c is received. For example, a number N of RACH occasions corresponding to an SSB beam may occur, and each the RACH occasions may be used for transmission of one alternative preamble message so that up to N transmissions of at least one preamble for the alternative RACH procedure may be transmitted. While four RACH occasions 502a-d are illustrated, the number of RACH occasions may be different in some aspects without departing from the scope of the present disclosure.

The UE 404 may transmit a preamble message 510 in each of the multiple RACH occasions 502a-d. In one aspect, the preamble message 510 in each of RACH occasions 502a-d may be the same. For example, the same preamble sequence may be used in each preamble message 510 in the RACH occasions 502a-d.

In another aspect, the preamble message 510 in each of the RACH occasions 502a-d may be different. However, the preamble messages 510 in the RACH occasions 502a-d may be linked together, as the RACH occasions 502a-d may be grouped (e.g., *k =* 4) as one RACH occasion that may carry the linked preamble messages 510. For example, the preamble sequences in each of the linked preamble messages 510 in the RACH occasions 502a-d may be linked.

The base station 402 may receive at least one alternative preamble message 432a. In some aspects, the base station 402 may receive multiple alternative preamble messages 432a-c. The base station 402 may determine a preamble sequence corresponding to the UE 404 from the multiple alternative preamble messages 432a-c, such as by receiving repetitions of the same preamble sequence or linking preamble sequences from the multiple alternative preamble messages 432a-c. In some aspects, the base station 402 may determine that the UE 404 is performing the alternative four-step RACH procedure based on the at least one preamble sequence included in at least one of the multiple preamble messages 432a-c, e.g., as the at least one preamble sequence is from a subset of preamble sequences respectively configured for the alternative four-step RACH procedure and/or multiple or linked preamble sequences are received across multiple alternative preamble messages 432a-c in a set of RACH occasions (e.g., the RACH occasions 502a-d, which may be a group of *k* RACH occasions on the same one of the base station beams 412).

Referring again to FIG. 4, the base station 402 may generate at least one alternative RAR message 434a based on at least one of the alternative preamble messages 432a-c. The base station 402 may generate the at least one alternative RAR message 434a to include control information (e.g., DCI) on a PDCCH, and data on a PDSCH. Further, on the PDSCH, the base station 402 may include a MAC CE that includes acknowledgement feedback for at least one of the alternative preamble messages 432a-c.

In one aspect, the DCI may be of a format other than 1_0. In another aspect, the DCI may include information indicating a number of repetitions of at least a portion of alternative RAR messages 434a-c. In still another aspect, the size of the DCI may be reduced (e.g., 24 bits) from the size of the DCI configured for a first RAR message of the first four-step RACH procedure.

The base station 402 may then transmit the at least one alternative RAR message 434a to the UE 404. In some aspects, the base station 402 may transmit multiple alternative RAR messages 434a-c, which may be repetitions of the same alternative RAR message.

In some aspects, the base station 402 may transmit, to the UE 404, a first alternative RAR message 434a including DCI on a first set of PDCCH candidates in a first monitoring occasion. The base station 402 may then transmit each of the other alternative RAR messages 434b-c including the DCI on a respective different set of PDCCH candidates in a respective different monitoring occasion.

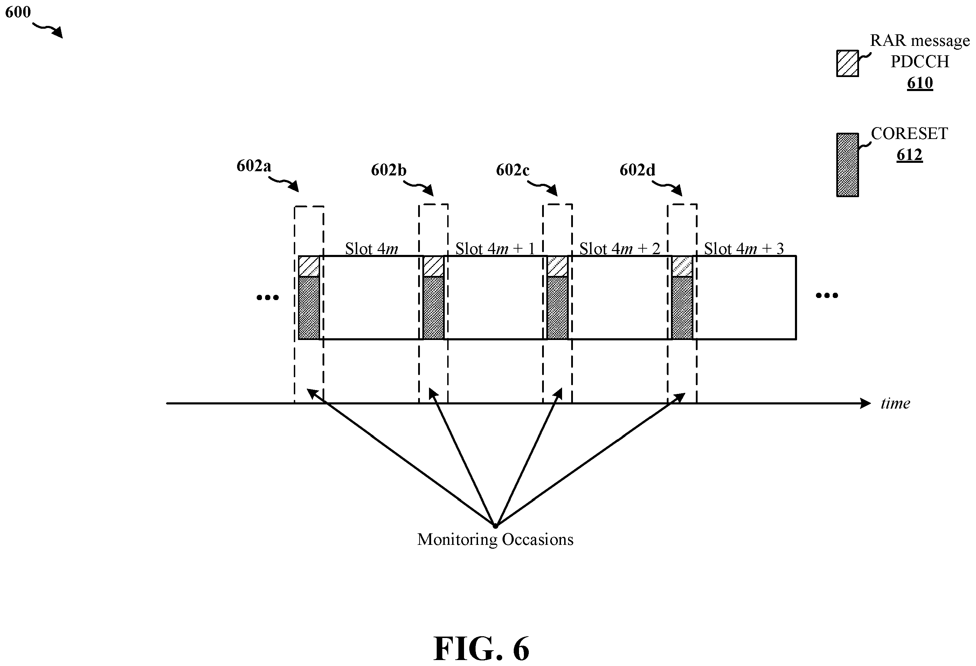

Referring to FIG. 6, an RAR message detection and reception example 600 is illustrated. In this example 600, a set of monitoring occasions 602a-d associated with RAR message reception is illustrated. While the number *m* of monitoring occasions is illustrated here as four, the number *m* of monitoring occasions may be different in some aspects without departing from the scope of the present disclosure - e.g., 1 ≤ *m* ≤ 10, 25, 50, 100, or another upper bound.

Each of the monitoring occasions 602a-d may include a respective control resource set (CORESET) 612, in which the PDCCH 610 of each of the alternative RAR messages 434a-c may be found. The DCI of each of the alternative RAR messages 434a-c may be carried in a respective PDCCH 610 in a respective CORESET 612 in each of *m* monitoring occasions 602a-d. The candidates for PDCCH 610 may have the same index over multiple slots in which the *m* monitoring occasions 602a-d occur.

The *m* monitoring occasions 602a-d may be aggregated together, and the corresponding candidates for PDCCH 610 with the same aggregation level and location (and/or index) may be grouped together in aggregated *m* monitoring occasions 602a-d. Similarly to the RACH occasions 502a-d illustrated in FIG. 5, the monitoring occasions may be grouped together in *j* groups of consecutive monitoring occasions, and the respective locations of the CORESET 612 in each group of aggregated slots (4*m*)-(4*m*+3) may form one virtual monitoring occasion in which the DCI is carried in the alternative RAR messages 434a-c.

The UE 404 may receive the DCI of the alternative RAR messages 434a-c in the *m* monitoring occasions 602a-d, found on the candidates for PDCCH 610 in the CORESET 612. The UE 404 may perform soft combining of the DCI received across multiple RAR messages 434a-c before performing blind decoding and cyclic redundancy check (CRC).

Referring again to FIG. 4, the UE 404 may detect or monitor for the alternative RAR messages 434a-c in an alternative RAR window 408. In some aspects, the duration of the alternative RAR window 408 may have be respectively configured by the system information 422. In some other aspects, the duration of the alternative RAR window 408 may be shorter than the duration of the first RAR window 406.

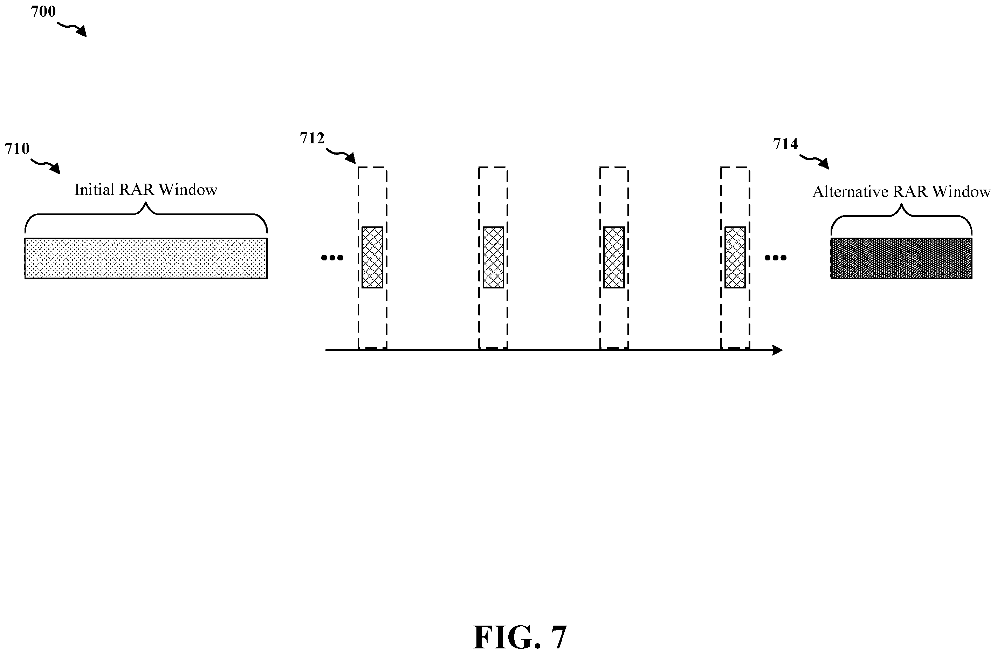

With respect to FIG. 7, a block diagram illustrates a timing occasion example 700 that includes preamble transmissions and RAR windows for a second (or alternative) RACH procedure. In the context of FIG. 4, the UE 404 may monitor for the first RAR message in the first or initial RAR window 710, as described *supra.* In the illustrated aspect, the initial RAR window 710 may be a default or initially observed time period in which an RAR message for an initial RACH procedure would be expected. The initial RAR window 710 may be a nonrecurring window, and therefore, repetition of control information on the PDCCH may be absent. Consequently, a UE failing to receive some or all of the control information in the initial RAR window may be unable to successfully complete the initial RACH procedure, e.g., as the UE may be unaware of an uplink grant and/or how to find other information on the PDSCH.

If the UE 404 fails to receive at least a portion of a first RAR message in the first RAR window 710, the UE 404 may transmit multiple alternative preamble messages 712. Each of the alternative preamble messages 712 may include at least a portion of some information - e.g., the same preamble may be transmitted in each of the alternative preamble messages 712. Subsequently, the UE may monitor for the alternative RAR messages 434a-c in the alternative RAR window 714 in order to detect repetitions of the DCI on the PDCCH across *j* consecutive monitoring occasions so that the UE 404 may perform soft combining of the DCI before performing blind decoding and CRC.

In some aspects, the first RAR window 710 and the alternative RAR window 714 may have different lengths. For example, the length of the first RAR window 710 may be of a relatively longer duration than that of the alternative RAR window 714. In some other aspects, the length of the first RAR window 710 may be the same at the length of an RAR window configured for legacy UEs (e.g., UEs that do not support alternative four-step RACH procedures).

In still other aspects, the base station 402 may configure a length of the first RAR window 710 based on measurement information 426 received from the UE 404. For example, the base station 402 may configure a relatively shorter first RAR window 710 for the UE 404 when the measurement information 426 provided by the UE 404 indicates a value (e.g., SSB-based RSRP) that fails to satisfy (e.g., is less than) a threshold. In yet other aspects, the base station 402 may configure a different offset between the start of the alternative RAR window 714 and the one or more alternative preamble messages 432a-c than the offset configured for the first RAR window 710 and the first preamble message 428.

In response to receiving one or more of the alternative RAR messages 434a-c, the UE 404 may generate a connection request message 438. The UE 404 may transmit the connection request message 438 to the base station 402, e.g., based on an uplink grant determined by the UE 404 from the one or more alternative RAR messages 434a-c. In some aspects, the UE 404 may generate and/or transmit the connection request message 438 according to a respective configuration for the alternative four-step RACH procedure. For example, the UE 404 may transmit multiple repetitions of the connection request message 438 in order to improve coverage when performing the alternative four-step RACH procedure.

The base station 402 may receive the connection request message 438 and, based thereon, may generate a contention resolution message 440. The base station 402 may then transmit the contention resolution message 440 to the UE 404. In some aspects, the base station 402 may generate and/or transmit the contention resolution message 440 according to a respective configuration for the alternative four-step RACH procedure. For example, the base station 402 may transmit multiple repetitions of the contention resolution message 440 in order to improve coverage when performing the alternative four-step RACH procedure.

The UE 404 may receive the contention resolution message 440, and the alternative four-step RACH procedure may be completed. In some aspects, the UE 404 may transmit acknowledgement feedback to the base station 402 in response to the contention resolution message 440, which may complete the alternative four-step RACH procedure. Accordingly, the UE 404 may access the cell provided by the base station 402 and may camp thereon; in addition, the UE 404 may acquire uplink synchronization with the base station 402.

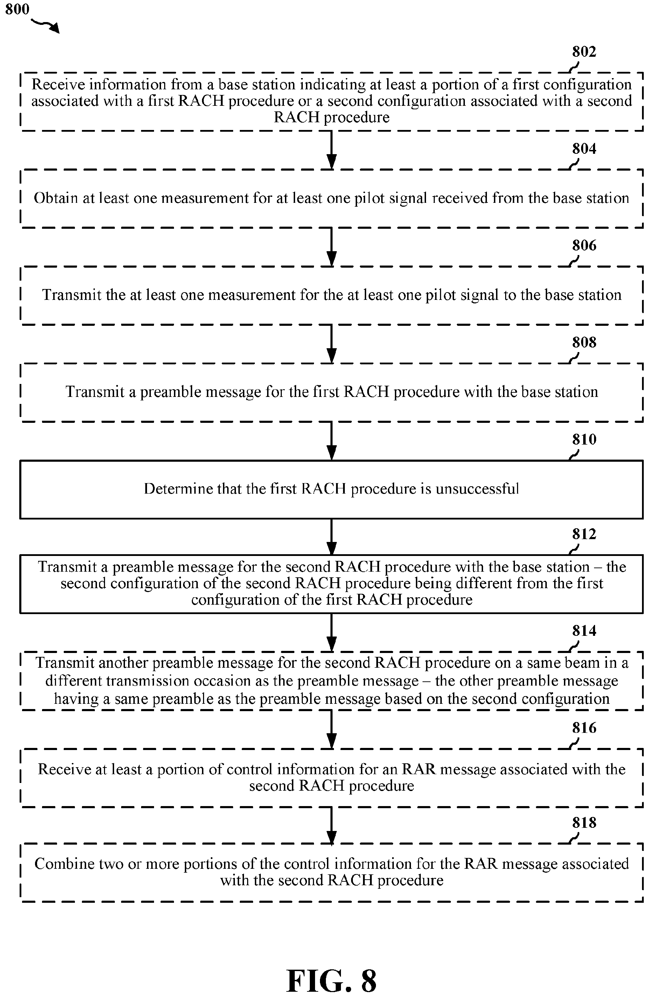

FIG. 8 is a flowchart of a method 800 of wireless communication. In some aspects, the method 800 may be performed by a UE or component thereof (e.g., the UE 104, 350, 404, which may include the memory 360 and which may be the entire UE 104, 350, 404 or a component of the UE 104, 350, 404, such as the TX processor 368, the RX processor 356, and/or the controller/processor 359). In some other aspects, the method 800 may be performed by an apparatus or component thereof (e.g., the apparatus 1002). According to various aspects of the method 800, one or more of the illustrated operations may be omitted, transposed, and/or contemporaneously performed.

At 802, the UE may receive information from a base station indicating at least a portion of a first configuration associated with a first RACH procedure or a second configuration associated with a second RACH procedure. In some aspects, the first RACH procedure may be an initially selected or default RACH procedure, e.g., that the UE should select unless a set of conditions triggering the second RACH procedure are satisfied. Thus, the second RACH procedure may be an alternative RACH procedure, such as a RACH procedure used a fallback in conditions on a channel with the base station are poor. Referring to FIG. 4, for example, the UE 404 may receive the system information 422 from the base station 402, and the system information 422 may indicate various parameters associated with an initial or default RACH procedure and/or another RACH procedure, such as an alternative RACH procedure.

The information may be included in at least one of a RMSI, OSI, and/or another SIB. The information may indicate a respective configuration for an alternative RACH procedure, different from a first (e.g., initial and/or conventional) four-step RACH procedure, for at least one of an alternative preamble message different from the first preamble message, transmission of the alternative preamble message, detection of an alternative RAR message different from the first RAR message, reception of the alternative RAR message, an alternative RAR window different from the first RAR window, an alternative size of alternative DCI carried in the alternative RAR message different from a first size of first DCI configured for the first RAR message, alternative content of the alternative DCI different from first content configured for the first DCI, transmission of an alternative connection request message different from a first connection request message configured for the first RACH procedure, detection of an alternative contention resolution message different from a first contention resolution message configured for the first RACH procedure, and/or reception of the alternative contention resolution message.

In one aspect, the respective configuration of the alternative preamble message indicates at least one of a subset of a set of sequences for preamble generation, and/or an alternative preamble format different from a first preamble format configured for the first preamble message. In another aspect, the respective configuration of the transmission of the alternative preamble message indicates at least one of an alternative transmit power for the transmission of the alternative preamble message that is higher than a first transmit power with which the first preamble message is transmitted, and/or a subset of a set of RACH occasions for the transmission of the alternative preamble message.

In some aspects, the first configuration is different from the second configuration in at least one of the first configuration is different from the second configuration in at least one of: a set of parameters for a preamble to be included in a preamble message; a set of parameters for transmission of a preamble message; a set of parameters for at least one of detection or reception of an RAR message to be expected in response to a preamble message; a size of at least one portion of an RAR message; a definition for content of an RAR message; a set of parameters for transmission of a third message that follows a preamble message and an RAR message in a RACH procedure; a set of parameters for at least one of detection or reception of a fourth message that follows a preamble message, an RAR message, and a third message in a RACH procedure. In some aspects, the set of parameters for a preamble may differ between the first configuration and the second configuration in at least one of a set of sequences for generation of a preamble or a format for a preamble. In some other aspects, the set of parameters for transmission of a preamble message may differ between the first configuration and the second configuration in at least one of a transmit power for transmission of a preamble message or a set of occasions in which to transmit a preamble message.

At 804, the UE may obtain at least one measurement for at least one pilot signal from the base station. For example, the UE may receive at least one SSB (or other pilot signal), and based thereon, the UE may measure at least one RSRP (or other value indicative of signal strength and/or channel quality with the base station) with which at least one SSB (or other pilot signal) is received from the base station. Referring to FIG. 4, for example, the UE 404 may receive the SSBs 424a-c from the base station 402 via the base station beams 412, and the UE 404 may determine the measurement information 426 based on receiving the SSBs 424a-c.

At 806, the UE may transmit the at least one measurement for the at least one pilot signal to the base station. For example, the UE may transmit the at least one RSRP for the at least one SSB to the base station, e.g., in an alternative preamble message or in another message. Referring to FIG. 4, for example, the UE 404 may transmit the measurement information 426 to his brother based on receiving the SSBs 424a-c.

At 808, the UE may transmit a first preamble message associated with the first RACH procedure to the base station. The UE may generate and/or transmit a preamble for the first preamble message using a first configuration for the first RACH procedure - such as by using a set of sequences associated with RACH preambles and/or transmitting a preamble message with a transmission power that is consistent with or defined by the first configuration. For example, referring to FIG. 4, the UE 404 may transmit the first preamble message 428 to the base station 402.

At 810, the UE may determine that the first RACH procedure is unsuccessful. In some aspects, the UE may determine that the first RACH procedure is unsuccessful before or without transmitting the first preamble message for the first RACH procedure. Illustratively, the UE may determine that the conditions on the wireless channel with the base station are poor enough to warrant implementing some elements that may increase overhead and/or network signaling, but will also likely increase the probability of a successful RACH procedure. For example, referring to FIG. 4, the UE 404 may determine that the first RACH procedure for which the first preamble message 428 is transmitted is unsuccessful.

In one aspect, the UE may determine that the first RACH procedure is unsuccessful after the UE fails to receive a first RAR message responsive to the first preamble message for the first RACH procedure in a first RAR window. That is, the UE may detect for the first RAR message in the first RAR window following transmission of the first preamble message for the first RACH procedure and, next, the UE may determine whether the first RAR message is received within the first RAR window. If the UE determines that the first RAR message is absent from (e.g., not received in) the first RAR window, then the UE may determine that the first RACH procedure is unsuccessful.

In another aspect, the UE may determine that the first RACH procedure may be unsuccessful based on the at least one measurement (e.g., RSRP) obtained for the at least one pilot signal (e.g., SSB). For example, the UE may compare the at least one RSRP measured for the at least one SSB to a threshold and, next, the UE may determine whether the at least one RSRP satisfies the threshold. If the UE determines that the at least one RSRP fails to satisfy (e.g., is less than) the threshold, then the UE may determine that the first RACH procedure is likely to be unsuccessful.

At 812, the UE may transmit a preamble message for the second RACH procedure with the base station. The UE may generate the preamble message for the second RACH procedure based on the second configuration. In transmitting the preamble message for the second RACH procedure, the UE may be performing the alternative RACH procedure with the base station based on the unsuccessful first RACH procedure. In some aspects, the preamble message for the second RACH procedure may include the at least one measurement (e.g., RSRP) measured from the at least one pilot signal (e.g., SSB). Referring to FIG. 4, for example, the UE 404 may perform the alternative four-step RACH procedure with the base station 402, which the UE 404 may initiate by transmitting one or more of the alternative preamble message 432a-c.

As the second configuration is different from the first configuration for the first RACH procedure, the preamble message for the second RACH procedure may be different from that generated from the first RACH procedure. For example, the second preamble may be generated using one or more parameters for root index or base sequence, preamble format, and/or cyclic shift that are different from one or more respectively corresponding parameters in the first configuration. Potentially, one or more parameters associated with preamble generation in the second configuration may be different from one or more respectively corresponding parameters in the first configuration by virtue of being reduced from the one or more respectively corresponding parameters of the first configuration. For example, a set of sequences that may be used for a preamble in the first RACH procedure according to the first configuration may be limited to a subset of the set of sequences in the second RACH procedure according to the second configuration.

At 814, the UE may transmit at least one other preamble message for the second RACH procedure. For example, when the UE performs the alternative RACH procedure, the UE may generate at least one other preamble message as a retransmission of at least a portion of the initial preamble message transmitted for the second RACH procedure. In particular, the at least one other preamble message may include the same preamble as the initial preamble message for the second RACH procedure. Referring to FIGs. 4 and 5, for example, the UE 404 may transmit a preamble message 510 in each of the multiple RACH occasions 502a-d. Potentially, each of transmission of the preamble message 510 may be on the same beam. Referring to FIGs. 4 and 7, for example, the UE 404 may transmit multiple alternative preamble messages 712. Each of the multiple alternative preamble messages 712 may be transmitted on the same beam, but in a respectively unique RACH occasion.

In some aspects, the UE may transmit the at least one other preamble message on the same beam as the initial preamble message. However, the UE may transmit each preamble message for the second RACH procedure in a respective RACH occasion, which may include one or more symbols, slots, or subframes designated as a transmission occasion for a PRACH preamble. In other words, each of the at least one other preamble messages may be transmitted in a RACH occasion that is different from each other RACH occasion in which any initial or other preamble message is transmitted.

At 816, the UE may receive at least a portion of control information for an RAR message associated with the second RACH procedure. As the at least the portion of the control information is for RAR message, the at least the portion of the control information may be received in response to at least one alternative preamble message (e.g., an initial alternative preamble message or at least one other alternative preamble message). The control information may include DCI. In some aspects, the UE may find and decode the RAR message on a control channel (e.g., PDCCH), which may include control information directing the UE to a position on a data channel (e.g., PDSCH) at which the UE may find and decode the complete RAR message (e.g., an uplink grant, RNTI, bandwidth assignment, etc. may be included in an RAR message on the data channel). Referring to FIG. 4, for example, the UE 404 may receive at least a portion of control information for an alternative RAR message 434a-c. The UE 404 may elicit the alternative RAR messages 434a-c from the base station 402 by transmitting one or more of the alternative preamble messages 432a-b.

In some aspects, the second configuration of the second RACH procedure may include information that may be used to define a second RAR window in which the UE may expect an alternative RAR message following transmission of an alternative preamble message. For example, the second configuration may define at least one of a duration for the second RAR window and/or an offset for the second RAR window - e.g., the offset may be relative to transmission of one or more alternative preamble messages, such as an offset from an initially transmitted preamble message or an offset from a last transmitted preamble message for the second RACH procedure. At least one of an RAR window duration or an RAR window the offset may differ between the first and second configurations. For example, the RAR window duration may be of a longer duration according to the second configuration than the first configuration, and/or the second RAR window may be offset in time from a preamble transmission by a greater or lesser amount of time according to the second configuration than the first configuration. Referring to FIG. 4, for example, the UE 404 may receive at least a portion of control information for an alternative RAR message 434a-c in at least one second RAR window 408. In the context of FIG. 7, the UE 404 may monitor for and receive one or more of the alternative RAR messages 434a-c in the alternative RAR window 714.

In some other aspects, at least a portion of the control information for the RAR message is carried on a set of candidate resources in a monitoring occasion. Potentially, the base station may transmit multiple repetitions of an alternative RAR message, e.g., based on the second configuration and/or in response to receiving an alternative preamble message(s). The UE may perform some of the alternative RACH procedure with the base station by receiving, from the base station, one or more of the repetitions of the RAR message on a respective set of candidate resources on which the UE may find and decode RAR messages for the second RACH procedure. For example, the UE may receive and decode a first transmission of an alternative RAR message including at least a first portion of control information (e.g., alternative DCI) on a first set of candidate resources (e.g., PDCCH candidates) in a first monitoring occasion. Potentially, the UE may be unable to successfully receive and decode all of the control information on the first set of candidate resources in the first monitoring occasion, for example, due to poor channel conditions, path loss, and the like. However, the base station may transmit multiple repetitions of the alternative RAR message based on the second configuration. Thus, the UE may further receive, from the base station based on at least the second configuration, at least one other transmission of the alternative RAR message on at least one other set of candidate resources (e.g., PDCCH candidates) in at least one other monitoring occasion, and the UE may recover at least one other portion of the control information (e.g., alternative DCI).

Referring to FIG. 4, for example, the UE 404 may receive at least a portion of control information from one or more of the alternative RAR message 434a-c that may include repetitions of the same or at least partially the same control information. In the context of FIG. 6, the UE 404 may monitor for RAR transmission over each of the monitoring occasions 602a-d, for example, for as long as the UE 404 does not have a sufficient amount of information to recover the full or nearly full RAR message or until the repetitions have ceased. In the monitoring occasions 602a-d, the UE 404 may receive at least one RAR PDCCH 610, which may direct the UE 404 to find at least one CORESET 612 that the UE 404 may decode to obtain at least a portion of the alternative RAR message.

At 818, the UE may combine two or more portions of the control information for the RAR message associated with the second RACH procedure. For example, the UE may determine that more bit erasures and/or errors are detected or otherwise occur in one portion of the control information on which a first transmission of the alternative RAR message is received. The UE may also find and decode at least one other portion of the control information, which may include some or all of the information unrecoverable or missing from the first portion of the information decoded by the UE. Accordingly, the UE may combine the first portion and the at least one other portion of the information in order to obtain the full alternative RAR message, or as much of the alternative RAR message as needed (e.g., the UE may recover a payload of the RAR message, and the UE may determine a sufficient amount of the alternative RAR message is recovered). The UE may aggregate the recovered portions into one RAR message (or one portion of an RAR message, such as the payload), and the UE may validate or verify the portions in the aggregate as a single message or portion thereof for data integrity, data verification, data security, error detection, bit erasures, and the like. For example, the UE may use a CRC method or algorithm in which the UE calculates a CRC value from the recovered alternative RAR message and compares that CRC value with an expected CRC value obtained from one or more of the portions of the alternative RAR message. If the calculated CRC value matches the expected CRC value, then the UE may determine that the alternative RAR message has been successfully recovered. If, however, the calculated CRC value conflicts with (e.g., does not match, is not equal, etc.), then the UE may determine that the recovered alternative RAR message fails CRC, which is may have been caused by missing or corrupted bits. The UE may reattempt the second RACH procedure if the recovered alternative RAR message fails a validation or verification check, or the UE may attempt to receive additional transmissions of the alternative RAR message if the base station is still transmitting.

Referring to FIG. 4, for example, the UE 404 may combine respective portions of the control information from at least two of the received transmissions of the alternative RAR messages 434a-c. In so doing, the UE 404 may recover a complete or nearly complete alternative RAR message, e.g., as transmitted by the base station 402. The UE may perform a validation and/or verification check on the recovered alternative RAR message in order to confirm that the correct information has been recovered.

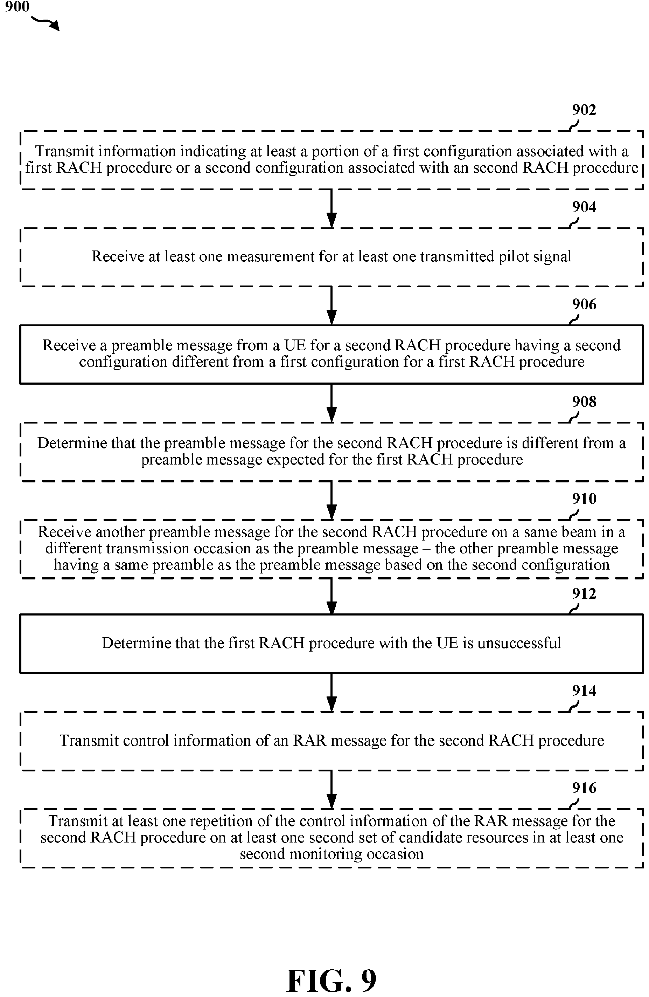

FIG. 9 is a flowchart of a method 900 of wireless communication. The method 900 may be performed by a base station or a component thereof (e.g., the base station 102/180, 310, 402, which may include the memory 376 and which may be the entire base station 102/180, 310, 402 or a component of the base station 102/180, 310, 402, such as the TX processor 316, the RX processor 370, and/or the controller/processor 375). According to various aspects of the method 900, one or more of the illustrated operations may be omitted, transposed, and/or contemporaneously performed.

At 902, the base station may transmit information indicating at least a portion of a first configuration associated with a first RACH procedure or a second configuration associated with a second RACH procedure. For example, the information may indicate at least one respective configuration associated with an alternative RACH procedure. Referring to FIG. 4, for example, the base station 402 may transmit the system information 422 to the UE 404.

The information may be included in at least one of a SIB (e.g., SIB1) and/or RMSI. The information may indicate a respective configuration for an alternative RACH procedure, different from a first (e.g., initial and/or conventional) four-step RACH procedure, for at least one of an alternative preamble message different from the first preamble message, transmission of the alternative preamble message, detection of an alternative RAR message different from the first RAR message, reception of the alternative RAR message, an alternative RAR window 408 different from the first RAR window 406, an alternative size of alternative DCI carried in the alternative RAR message different from a first size of first DCI configured for the first RAR message, alternative content of the alternative DCI different from first content configured for the first DCI, transmission of an alternative connection request message different from a first connection request message configured for the first RACH procedure, detection of an alternative contention resolution message different from a first contention resolution message configured for the first RACH procedure, and/or reception of the alternative contention resolution message.

In one aspect, the respective configuration of the alternative preamble message indicates at least one of a subset of a set of sequences for preamble generation, and/or an alternative preamble format different from a first preamble format configured for the first preamble message. In another aspect, the respective configuration of the transmission of the alternative preamble message indicates at least one of an alternative transmit power for the transmission of the alternative preamble message that is higher than a first transmit power with which the first preamble message is transmitted, and/or a subset of a set of RACH occasions for the transmission of the alternative preamble message.

In some aspects, the first configuration is different from the second configuration in at least one of the first configuration is different from the second configuration in at least one of: a set of parameters for a preamble to be included in a preamble message; a set of parameters for transmission of a preamble message; a set of parameters for at least one of detection or reception of an RAR message to be expected in response to a preamble message; a size of at least one portion of an RAR message; a definition for content of an RAR message; a set of parameters for transmission of a third message that follows a preamble message and an RAR message in a RACH procedure; a set of parameters for at least one of detection or reception of a fourth message that follows a preamble message, an RAR message, and a third message in a RACH procedure. In some aspects, the set of parameters for a preamble may differ between the first configuration and the second configuration in at least one of a set of sequences for generation of a preamble or a format for a preamble. In some other aspects, the set of parameters for transmission of a preamble message may differ between the first configuration and the second configuration in at least one of a transmit power for transmission of a preamble message or a set of occasions in which to transmit a preamble message.

At 904, the base station may receive at least one measurement for at least one transmitted pilot signal. For example, the pilot signal may be an SSB that the base station transmits on a beam, and the at least one measurement may include an RSRP measured from the SSB. The at least one measurement may implicitly signal information as to whether a RACH procedure will be unsuccessful. For example, the at least one measurement may fail to satisfy (e.g., may be less than) a threshold for performing a first RACH procedure. In some aspects, the at least one measurement may be received in a preamble message for a second RACH procedure. Referring to FIG. 4, for example, the UE 404 may transmit the measurement information 426 to the base station 402.

At 906, the base station may receive a preamble message from a UE for a second RACH procedure having the second configuration different from the first configuration for a first RACH procedure. In some aspects, the preamble message may include the at least one measurement. In some aspects, the first RACH procedure may be a default or initial RACH procedure, whereas the second RACH procedure may be a fallback or other alternative RACH procedure. Referring to FIG. 4, for example, the base station 402 may receive one or more of the alternative preamble messages 432a-c from the UE 404 for the alternative RACH procedure.

At 908, the base station may determine that the preamble message for the second RACH procedure is different from a preamble message expected for the first RACH procedure. According to various aspects, the base station may identify that the received preamble message is different from an expected preamble message for the first RACH procedure in at least one of a format, a content definition, a preamble, and/or information carried therein. For example, when included by a UE, the base station may find at least one measurement for at least one pilot signal in the received preamble message, which may not be expected to occur in the first preamble message. Referring to FIG. 4, for example, the base station 402 may receive the first preamble message 428 from the UE 404, or the base station 402 may expect to see a message similar to the first preamble message 428 for a first RACH procedure. The base station 402 may determine that the first preamble message 428 is different from the alternative preamble messages 432a-c from the UE 404 for the second (or alternative) RACH procedure.

At 910, the base station may receive at least one other preamble message from the UE for a second RACH procedure having the second configuration different from the first configuration for a first RACH procedure. The at least one other preamble message may include the same preamble as a previously received preamble message for the second RACH procedure. In some aspects, the base station may receive the at least one other preamble message on the same beam as another preamble message for the second RACH procedure. However, each preamble message for the second RACH procedure may be in a respective RACH occasion, which may include one or more symbols, slots, or subframes designated as a transmission occasion for a PRACH preamble. Referring to FIG. 4, for example, the base station 402 may receive one or more of the alternative preamble messages 432a-c from the UE 404 for the alternative RACH procedure.

At 912, the base station may determine that the first RACH procedure with the UE is unsuccessful. For example, when included by a UE, the base station may find at least one measurement in a received preamble message, and the base station may compare the at least one measurement with a threshold. The base station may determine that the first RACH procedure is unsuccessful where the at least one measurement fails to satisfy (e.g., is less than) the threshold based on the comparison. In another aspect, the base station may receive the alternative preamble message, and the base station may determine that alternative preamble message is different from a preamble message expected for a first RACH procedure. Therefore, the base station may determine that the first RACH procedure with the UE is unsuccessful. In a further aspect, the base station may receive a first alternative preamble message, and the base station may maintain a count of the received alternative preamble messages. When the base station receives another alternative preamble message (e.g., on the same beam in a different transmission occasion) that is a retransmission of the previously received alternative preamble message, the base station may determine that the second RACH procedure is being performed by the UE, and therefore, the first RACH procedure is unsuccessful. Referring to FIG. 4, for example, the base station 402 may determine that a first (e.g., initial and/or conventional) four-step RACH procedure with the UE 404 is unsuccessful, e.g., where the first preamble message 428 is not received, where one or more of the alternative preamble messages 432a-c are received, etc.

In one aspect, the base station may determine that the first RACH procedure is unsuccessful when the base station receives at least one alternative preamble message from the UE. The base station may identify the preamble sequence from the at least one alternative preamble message, and the base station may determine that the preamble sequence is associated with the subset of preamble sequences respectively configured for the alternative four-step RACH procedure.

In another aspect, the base station may receive at least one RSRP for at least one SSB from the UE, and the base station may determine that the first RACH procedure may be unsuccessful based on the at least one RSRP measured for the at least one SSB. For example, the base station may compare the at least one RSRP received from the UE to a threshold and, next, the base station may determine whether the at least one RSRP satisfies the threshold. If the base station determines that the at least one RSRP fails to satisfy (e.g., is less than) the threshold, then the base station may determine that the first RACH procedure is likely to be unsuccessful.

At 914, the base station may transmit control information of an RAR message for the second RACH procedure. The base station may transmit the RAR message in response to at least one of the alternative preamble messages. In some aspects, the base station may transmit the RAR message on a first set of candidate resources in a first monitoring occasion. In some other aspects, the base station may transmit the RAR message in a window having a duration and being offset from timing associated with the alternative preamble message according to the second configuration for the second RACH procedure, and therefore, in some aspects, at least one of the RAR window duration and/or RAR window offset may conflict with the first configuration for the first RACH procedure. Referring to FIG. 4, for example, the base station 402 may transmit at least one of the alternative RAR messages 434a-c, e.g., in the second RAR window 408 in response to one or more of the alternative preamble messages 432a-c. In the context of FIG. 7, the base station may transmit one or more of the alternative preamble messages 432a-c in the alternative RAR window 714.

At 916, the base station may transmit at least one repetition of the control information of the RAR message for the second RACH procedure on at least one second set of candidate resources in at least one second monitoring occasion. That is, the base station may repeat the RAR message for the second RACH procedure, e.g., based on the second configuration, which may increase the probability that the UE will be able to successfully receive and decode the RAR message.

Referring to FIG. 4, for example, the base station 402 may transmit at least one other alternative RAR message 434b, e.g., on a second set of candidate resources in a second monitoring occasion different from that of an earlier transmission of the alternative RAR message. In the context of FIG. 6, the base station may transmit at least two of the alternative preamble messages 432a-c having an RAR PDCCH 610 that enables the UE to find and decode a corresponding CORESET 612 of the RAR message.

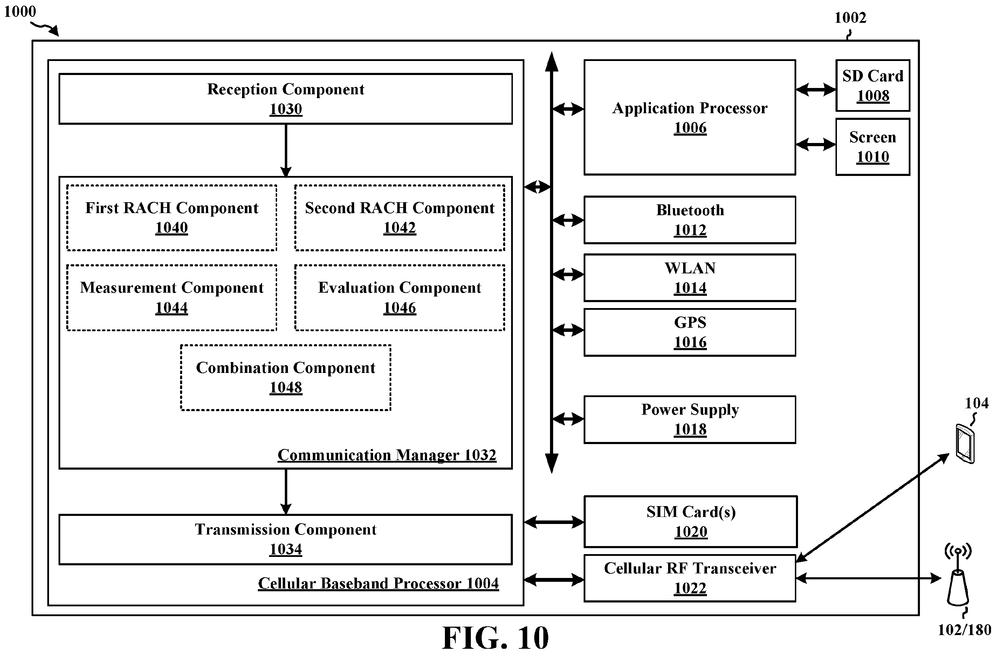

FIG. 10 is a diagram 1000 illustrating an example of a hardware implementation for an apparatus 1002. The apparatus 1002 is a UE and includes a cellular baseband processor 1004 (also referred to as a modem) coupled to a cellular RF transceiver 1022 and one or more subscriber identity modules (SIM) cards 1020, an application processor 1006 coupled to a secure digital (SD) card 1008 and a screen 1010, a Bluetooth module 1012, a wireless local area network (WLAN) module 1014, a Global Positioning System (GPS) module 1016, and a power supply 1018. The cellular baseband processor 1004 communicates through the cellular RF transceiver 1022 with the UE 104 and/or base station 102/180. The cellular baseband processor 1004 may include a computer-readable medium / memory. The computer-readable medium / memory may be non-transitory. The cellular baseband processor 1004 is responsible for general processing, including the execution of software stored on the computer-readable medium / memory. The software, when executed by the cellular baseband processor 1004, causes the cellular baseband processor 1004 to perform the various functions described *supra.* The computer-readable medium / memory may also be used for storing data that is manipulated by the cellular baseband processor 1004 when executing software. The cellular baseband processor 1004 further includes a reception component 1030, a communication manager 1032, and a transmission component 1034. The communication manager 1032 includes the one or more illustrated components. The components within the communication manager 1032 may be stored in the computer-readable medium / memory and/or configured as hardware within the cellular baseband processor 1004.

In the context of FIG. 3, the cellular baseband processor 1004 may be a component of the UE 350 and may include the memory 360 and/or at least one of the TX processor 368, the RX processor 356, and the controller/processor 359. In one configuration, the apparatus 1002 may be a modem chip and include just the baseband processor 1004, and in another configuration, the apparatus 1002 may be the entire UE (e.g., the UE 350 of FIG. 3) and include the aforediscussed additional modules of the apparatus 1002. In one configuration, the cellular RF transceiver 1022 may be implemented as at least one of the transmitter 354TX and/or the receiver 354RX.

The reception component 1030 may be configured to receive information from the base station 102/180 indicating at least a portion of a first configuration associated with a first RACH procedure or a second configuration associated with a second RACH procedure, e.g., as described in connection with 802 of FIG. 8.

The communication manager 1032 may include a first RACH component 1040 that is configured to perform a first RACH procedure, and the communication manager 1032 may further includes a second RACH component 1042 that is configured to perform a second RACH procedure having a second configuration different from a first configuration of the first RACH procedure.

The communication manager 1032 may further include a measurement component 1044 that is configured to obtain at least one measurement (e.g., RSRP) for at least one pilot signal (e.g., SSB) received from the base station 102/180, e.g., as described in connection with 804 of FIG. 8.

The transmission component 1034 may transmit the at least one measurement for the at least one pilot signal to the base station 102/180, e.g., as described in connection with 806 of FIG. 8. The first RACH component 1040 may be configured to generate at least one preamble for the first RACH procedure, e.g., based on the first configuration. The transmission component 1034 may transmit a preamble message including the preamble for the first RACH procedure with the base station 102/180, e.g., as described in connection with 808 of FIG. 8.

The communication manager 1032 may further include an evaluation component 1046 that is configured to determine that a first RACH procedure with the base station 102/180 is unsuccessful, e.g., as described in connection with 810 of FIG. 8. In some aspects, the evaluation component 1046 may compare the at least one measurement for the pilot signal with a threshold and if the at least one measurement fails to satisfy the threshold, the evaluation component 1046 may determine that the first RACH procedure is unsuccessful.

The evaluation component 1046 may indicate to the second RACH component 1042 that the first RACH procedure is unsuccessful. Based thereon, the second RACH component 1042 may be further configured to generate at least one preamble, e.g., based on the second configuration. The second configuration may be different from the first configuration of the first RACH procedure, which may result in a different preamble than that which would result from preamble generation based on the first configuration.

The transmission component 1034 may transmit the preamble message for the second RACH procedure with the base station 102/180, e.g., as described in connection with 812 of FIG. 8. In some aspects, at least one of the preamble message for the first RACH procedure or the preamble message for the second RACH procedure may include information indicating the at least one measurement for the at least one pilot signal.

In some aspects, the second RACH component 1042 may be further configured to generate at least one other preamble message for the second RACH procedure. The at least one other preamble message may include a retransmission of at least a portion of the previously generated preamble message for the second RACH procedure - e.g., the at least one other preamble message may include the same preamble as the previously generated preamble message for the second RACH procedure. The transmission component 1034 may transmit the at least one other preamble message for the second RACH procedure on a same beam in a different transmission occasion as the previously generated (and transmitted) preamble message, e.g., as described in connection with 814 of FIG. 8.

The reception component 1030 may be configured to receive at least a portion of control information for an RAR message associated with the second RACH procedure, e.g., as described in connection with 816 of FIG. 8. In some aspects, the reception component 1030 may receive the RAR message for the second RACH procedure in an RAR window indicated by the second configuration having a configured duration and an offset (e.g., relative to the first or last preamble transmission of the second RACH procedure), and at least one of the RAR window duration or the RAR window offset may be inconsistent with the first configuration (e.g., in that at least one of the RAR window duration or RAR window offset is not indicated by and/or would not be derived from the first configuration).

Potentially, the reception component 1030 may receive two or more different portions of the control information for the RAR message associated with the same RACH procedure, e.g., on respective sets of candidate resources (e.g., PDCCH candidates) in respective monitoring occasions and/or RACH windows. The communication manager 1032 may further include a combination component 1048 that is configured to combine two or more portions of the control information for the RAR message associated with the second RACH procedure, e.g., as described in connection with 818 of FIG. 8. By combining the two or more portions of the control information, the combination component 1048 may recover the entire RAR message, as the entire message may not have been received in a single monitoring occasions and/or on a single set of candidate resources. The combination component 1048 may be further configured to validate or verify at least one of data integrity, data security, data validity, etc., such as by performing a CRC check on the RAR message recovered from combining multiple different portions of the RAR message received over multiple monitoring occasions on multiple sets of candidate resources.

The apparatus 1002 may include additional components that perform some or all of the blocks, operations, signaling, etc. of the algorithm(s) in the aforementioned call flow diagram and flowchart of FIGs. 4 and 8. As such, some or all of the blocks, operations, signaling, etc. in the aforementioned call flow diagram and flowchart of FIGs. 4 and 8 may be performed by a component and the apparatus 1002 may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1002, and in particular the cellular baseband processor 1004, includes means for determining that a first RACH procedure with a base station is unsuccessful; and means for transmitting, after determining that the first RACH procedure is unsuccessful, a preamble message for a second RACH procedure with the base station, a second configuration for the second RACH procedure being different from a first configuration for the first RACH procedure.

In one configuration, the apparatus 1002, and in particular the cellular baseband processor 1004, may further include means for obtaining at least one measurement for at least one pilot signal received from the base station, and the first RACH procedure is determined to be unsuccessful based on the at least one measurement failing to satisfy a threshold.

In one configuration, the apparatus 1002, and in particular the cellular baseband processor 1004, may further include means for transmitting the at least one measurement for the at least one pilot signal to the base station.

In one configuration, the apparatus 1002, and in particular the cellular baseband processor 1004, may further include means for transmitting another preamble message for the first RACH procedure before determining that the first RACH procedure is unsuccessful, and the first RACH procedure is determined to be unsuccessful based on an absence of a first RAR message expected in response to the other preamble message in a time period indicated by the first configuration.

In one configuration, the first configuration is different from the second configuration in at least one of: a set of parameters for a preamble to be included in a preamble message; a set of parameters for transmission of a preamble message; a set of parameters for at least one of detection or reception of an RAR message to be expected in response to a preamble message; a size of at least one portion of an RAR message; a definition for content of an RAR message; a set of parameters for transmission of a third message that follows a preamble message and an RAR message in a RACH procedure; or a set of parameters for at least one of detection or reception of a fourth message that follows a preamble message, an RAR message, and a third message in a RACH procedure.

In one configuration, the set of parameters for a preamble is different between the first configuration and the second configuration in at least one of a set of sequences for generation of a preamble or a format for a preamble.

In one configuration, the set of parameters for transmission of a preamble message is different between the first configuration and the second configuration in at least one of a transmit power for transmission of a preamble message or a set of occasions in which to transmit a preamble message.

In one configuration, the apparatus 1002, and in particular the cellular baseband processor 1004, may further include means for transmitting another preamble message on a same beam as the preamble message and in a second transmission occasion that is different from a first transmission occasion in which the preamble message is transmitted, and the other preamble message includes a same preamble as the preamble message based on the second configuration for the second RACH procedure.

In one configuration, the apparatus 1002, and in particular the cellular baseband processor 1004, may further include means for receiving first control information on a first resource set in a first monitoring occasion; means for receiving second control information on a second resource set in a second monitoring occasion, at least one of the first resource set being different from the second resource set or the first monitoring occasion being different from the second monitoring occasion; and means for combining the first control information and the second control information for an RAR message of the second RACH procedure.

In one configuration, the apparatus 1002, and in particular the cellular baseband processor 1004, may further include means for receiving an RAR message for the second RACH procedure in an RAR window indicated by the second configuration, at least one of a duration or an offset of the RAR window being inconsistent with the first configuration.

In one configuration, the apparatus 1002, and in particular the cellular baseband processor 1004, may further include means for receiving at least a portion of at least one of the first configuration or the second configuration from the base station.

The aforementioned means may be one or more of the aforementioned components of the apparatus 1002 configured to perform the functions recited by the aforementioned means. As described *supra,* the apparatus 1002 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

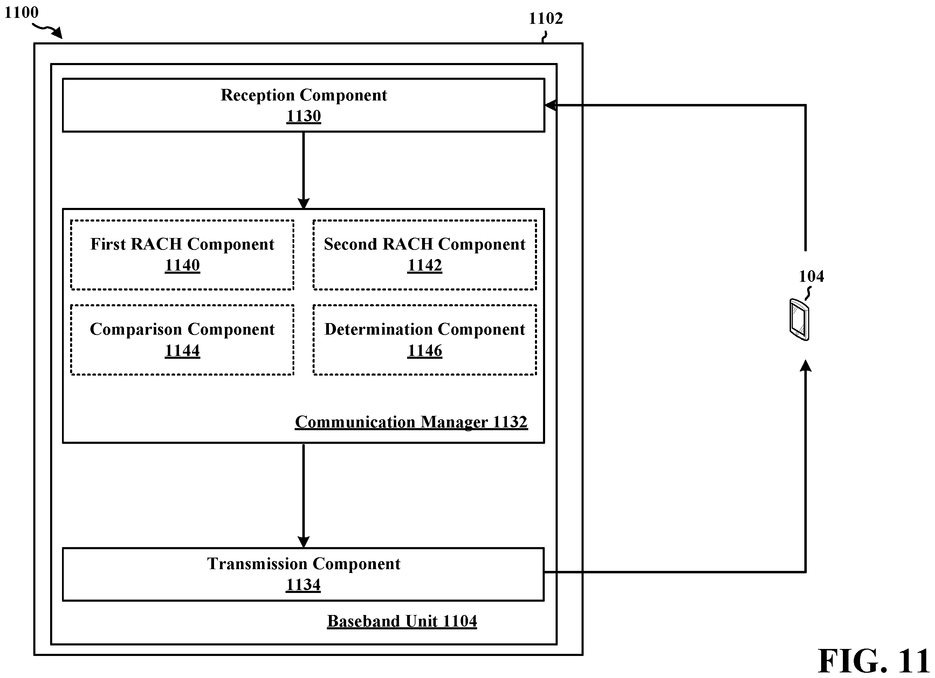

FIG. 11 is a diagram 1100 illustrating an example of a hardware implementation for an apparatus 1102. The apparatus 1102 is a base station and includes a baseband unit 1104. The baseband unit 1104 may communicate through a cellular RF transceiver with the UE 104. The baseband unit 1104 may include a computer-readable medium / memory. The baseband unit 1104 is responsible for general processing, including the execution of software stored on the computer-readable medium / memory. The software, when executed by the baseband unit 1104, causes the baseband unit 1104 to perform the various functions described *supra.* The computer-readable medium / memory may also be used for storing data that is manipulated by the baseband unit 1104 when executing software. The baseband unit 1104 further includes a reception component 1130, a communication manager 1132, and a transmission component 1134. The communication manager 1132 includes the one or more illustrated components. The components within the communication manager 1132 may be stored in the computer-readable medium / memory and/or configured as hardware within the baseband unit 1104. The baseband unit 1104 may be a component of the base station 310 and may include the memory 376 and/or at least one of the TX processor 316, the RX processor 370, and the controller/processor 375.

The communication manager 1132 may include a first RACH component 1140 that is configured to perform a first RACH procedure, and the communication manager 1132 may further includes a second RACH component 1142 that is configured to perform a second RACH procedure having a second configuration different from a first configuration of the first RACH procedure.

The transmission component 1134 may be configured to transmit information to the UE 104 indicating at least a portion of a first configuration associated with a first RACH procedure or a second configuration associated with a second RACH procedure, e.g., as described in connection with 902 of FIG. 9.

The reception component 1130 may receive the at least one measurement for the at least one pilot signal from the UE 104, e.g., as described in connection with 904 of FIG. 9. The reception component 1130 may be further configured to receive a preamble message for a second RACH procedure with the UE 104, e.g., as described in connection with 906 of FIG. 9. In some aspects, the preamble message for the second RACH procedure may include information indicating the at least one measurement for the at least one pilot signal.

The communication manager 1132 may further include a comparison component 1144 that may be configured to determine that the preamble message for the second RACH procedure is different from a preamble message expected for the first RACH procedure, e.g., as described in connection with 908 of FIG. 9. For example, the comparison component 1144 may compare the received preamble message with information associated with an expected preamble message for the first RACH procedure, and the comparison component 1144 may determine that the received preamble message is different from an expected one in terms of format, content, preamble sequence, and/or other factors.

The reception component 1130 may be further configured to receive at least one other preamble message for the second RACH procedure on a same beam in a different transmission occasion as the previously received preamble message, e.g., as described in connection with 910 of FIG. 9. The at least one other preamble message may include a retransmission of at least a portion of the previously generated preamble message for the second RACH procedure - e.g., the at least one other preamble message may include the same preamble as the previously generated preamble message for the second RACH procedure.

The communication manager 1132 may further include a determination component 1146 that is configured to determine that a first RACH procedure with the UE 104 is unsuccessful, e.g., as described in connection with 912 of FIG. 9. In some aspects, the determination component 1146 may compare the at least one measurement with a threshold and if the at least one measurement fails to satisfy the threshold, the determination component 1146 may determine that the first RACH procedure is unsuccessful.

The determination component 1146 may indicate to the second RACH component 1142 that the first RACH procedure is unsuccessful. Based thereon, the second RACH component 1142 may be further configured to generate at least one RAR message for the second RACH procedure with the UE 104, e.g., according to the second configuration.

The transmission component 1134 may be configured to transmit control information of an RAR message associated with the second RACH procedure, e.g., as described in connection with 914 of FIG. 9. The second configuration may be different from the first configuration of the first RACH procedure, which may result in a different RAR and/or different RAR transmission than that which would result from the first configuration. In some aspects, the transmission component 1134 may transmit the RAR message for the second RACH procedure in an RAR window indicated by the second configuration having a configured duration and an offset (e.g., relative to the first or last preamble received for the second RACH procedure), and at least one of the RAR window duration or the RAR window offset may be inconsistent with the first configuration.

Potentially, the transmission component 1134 may transmit at least one repetition of the control information of the RAR message for the second RACH procedure on at least one second set of candidate resources in at least one second monitoring occasion, e.g., as described in connection with 916 of FIG. 9.

The apparatus 1102 may include additional components that perform some or all of the blocks, operations, signaling, etc. of the algorithm(s) in the aforementioned call flow diagram and flowchart of FIGs. 4 and 9. As such, some or all of the blocks, operations, signaling, etc. in the aforementioned call flow diagram and flowchart of FIGs. 4 and 9 may be performed by a component and the apparatus 1102 may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1102, and in particular the baseband unit 1104, includes means for receiving a preamble message from a UE for a second RACH procedure having a second configuration different from a first configuration for a first RACH procedure; and means for determining that the first RACH procedure with the UE is unsuccessful.

In one configuration, the apparatus 1102, and in particular the baseband unit 1104, may further include means for receiving at least one measurement associated with at least one transmitted pilot signal, and the first RACH procedure with the UE is determined to unsuccessful based on the at least one measurement failing to satisfy a threshold.

In one configuration, the means for determining that the first RACH procedure with the UE is unsuccessful is configured to determine that the preamble message for the second RACH procedure is different from a preamble message expected for the first RACH procedure.

In one configuration, the first configuration is different from the second configuration in at least one of: a set of parameters for a preamble to be included in a preamble message; a set of parameters for transmission of a preamble message; a set of parameters for at least one of detection or reception of an RAR message to be expected in response to a preamble message; a size of at least one portion of an RAR message; a definition for content of an RAR message; a set of parameters for transmission of a third message that follows a preamble message and an RAR message in a RACH procedure; or a set of parameters for at least one of detection or reception of a fourth message that follows a preamble message, an RAR message, and a third message in a RACH procedure.

In one configuration, the set of parameters for a preamble is different between the first configuration and the second configuration in at least one of a set of sequences for generation of the preamble or a format for the preamble.

In one configuration, the set of parameters for transmission of a preamble message is different between the first configuration and the second configuration in at least one of a transmit power for transmission of a preamble message or a set of occasions in which to transmit a preamble message.

In one configuration, the apparatus 1102, and in particular the baseband unit 1104, may further include means for receiving at least one other preamble message having a same preamble as the preamble message for the second RACH procedure on a same beam as the preamble message, the at least one other preamble message being associated with a RACH occasion that is different from the RACH occasion with which the preamble message is associated.

In one configuration, the apparatus 1102, and in particular the baseband unit 1104, may further include means for transmitting, after receiving the preamble message, a first RAR message for the second RACH procedure on a first set of candidate resources in a first monitoring occasion; and means for transmitting a second RAR message for the second RACH procedure on a second set of candidate resources in a second monitoring occasion, the second RAR message including second control information that is at least partially the same as first control information of the first RAR message.

In one configuration, the apparatus 1102, and in particular the baseband unit 1104, may further include means for transmitting an RAR message for the second RACH procedure in an RAR window indicated by the second configuration, at least one of a duration or an offset of the RAR window being inconsistent with the first configuration.

In one configuration, the apparatus 1102, and in particular the baseband unit 1104, may further include means for transmitting at least a portion of at least one of the first configuration or the second configuration.

The aforementioned means may be one or more of the aforementioned components of the apparatus 1102 configured to perform the functions recited by the aforementioned means. As described supra, the apparatus 1102 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. The words "module," "mechanism," "element," "device," and the like may not be a substitute for the word "means." As such, no claim element is to be construed as a means plus function unless the element is expressly recited using the phrase "means for."

## Claims

1. A method of wireless communication by a user equipment, UE, comprising:
determining (810) that a first random access channel, RACH, procedure with a base station is unsuccessful;
transmitting (812), after determining that the first RACH procedure is unsuccessful, a second preamble message for a second RACH procedure with the base station, a second configuration of a random access response, RAR, message for the second RACH procedure being different from a first configuration of a RAR message for the first RACH procedure; and
receiving (816) the RAR message for the second RACH procedure based on the second configuration, wherein receiving the RAR message for the second RACH procedure based on the second configuration comprises receiving the RAR message for the second RACH in an RAR window indicated by the second configuration, at least one of a duration or an offset of the RAR window being inconsistent with the first configuration.

2. The method of claim 1, further comprising:
obtaining at least one measurement for at least one pilot signal received from the base station, wherein the first RACH procedure is determined to be unsuccessful based on the at least one measurement failing to satisfy a threshold.

3. The method of claim 2, further comprising:
transmitting the at least one measurement for the at least one pilot signal to the base station.

4. The method of claim 1, further comprising:
transmitting another preamble message for the first RACH procedure before determining that the first RACH procedure is unsuccessful, wherein the first RACH procedure is determined to be unsuccessful based on an absence of a first random access response, RAR, message expected in response to the other preamble message in a time period indicated by the first configuration.

5. The method of claim 1, wherein the second configuration is different from the first configuration in at least one of:
a set of parameters for at least one of detection or reception of the RAR message to be expected in response to the second preamble message for the second RACH procedure;
a size of at least one portion of the RAR message; or
a set of parameters for at least one of detection or reception of a fourth message that follows the second preamble message, the RAR message, and a third message in the second RACH procedure.

6. The method of claim 1, wherein a set of parameters for the second preamble message is different than a set of parameters for a first preamble message in at least one of a set of sequences for generation of the second preamble message or a format for the second preamble message.

7. The method of claim 1, wherein a set of parameters for the second preamble message is different than a set of parameters for a first preamble message in at least one of a transmit power for transmission of the second preamble message or a set of occasions in which to transmit the second preamble message.

8. The method of claim 1, further comprising:
transmitting another preamble message on a same beam as the second preamble message and in a second transmission occasion that is different from a first transmission occasion in which the second preamble message is transmitted, wherein
the other preamble message comprises a same preamble as the second preamble message based on the second configuration for the second RACH procedure.

9. The method of claim 1, further comprising:
receiving first control information on a first resource set in a first monitoring occasion for the second RACH procedure based on the second configuration;
receiving second control information on a second resource set in a second monitoring occasion for the second RACH procedure based on the second configuration, at least one of the first resource set being different from the second resource set or the first monitoring occasion being different from the second monitoring occasion; and
combining the first control information and the second control information for the RAR message of the second RACH procedure.

10. The method of claim 1, further comprising:
receiving at least a portion of at least one of the first configuration or the second configuration from the base station.

11. A method of wireless communication by a base station, comprising:
receiving (906) a second preamble message from a user equipment, UE, for a second random access channel, RACH, procedure having a second configuration different from a first configuration for a first RACH procedure;
determining (912) that the first RACH procedure with the UE is unsuccessful; and
transmitting (916) a random access response, RAR, message for the second RACH procedure based on the second configuration in response to determining that the first RACH procedure with the UE is unsuccessful, wherein the second configuration for the RAR message is different from the first configuration of for a RAR message for the first RACH procedure, wherein transmitting the RAR message comprises transmitting the RAR message for the second RACH procedure in an RAR window indicated by the second configuration, at least one of a duration or an offset of the RAR window being inconsistent with the first configuration.

12. The method of claim 11, further comprising:
receiving at least one measurement associated with at least one transmitted pilot signal, wherein the first RACH procedure with the UE is determined to unsuccessful based on the at least one measurement failing to satisfy a threshold.

13. An apparatus (1002) for wireless communication by a user equipment, UE, comprising:
a processor;
memory coupled with the processor; and
instructions stored in the memory and operable, when executed by the processor, to cause the apparatus to:
determine that a first random access channel, RACH, procedure with a base station is unsuccessful;
transmit, after the determination that the first RACH procedure is unsuccessful, a second preamble message for a second RACH procedure with the base station, a second configuration of a random access response, RAR, message for the second RACH procedure being different from a first configuration of a RAR message for the first RACH procedure; and
receive the RAR message for the second RACH procedure based on the second configuration, wherein the instructions to receive the RAR message for the second RACH procedure based on the second configuration cause the apparatus to receive the RAR message for the second RACH procedure in an RAR window indicated by the second configuration, at least one of a duration or an offset of the RAR window being inconsistent with the first configuration.

14. An apparatus (1102) for wireless communication by a base station, comprising:
a memory; and
at least one processor coupled to the memory and configured to:
receive a second preamble message from a user equipment, UE, for a second random access channel, RACH, procedure having a second configuration different from a first configuration for a first RACH procedure;
determine that the first RACH procedure with the UE is unsuccessful; and
transmit a random access response, RAR, message for the second RACH procedure based on the second configuration in response to determining that the first RACH procedure with the UE is unsuccessful, wherein the second configuration for the RAR message is different from the first configuration for a RAR message for the first RACH procedure, wherein transmitting the RAR message comprises transmitting the RAR message for the second RACH procedure in an RAR window indicated by the second configuration, at least one of a duration or an offset of the RAR window being inconsistent with the first configuration.

15. A computer-readable storage medium having stored thereon instructions that, when executed, cause a processor to perform the method according to any one of preceding claims 1 to 12.

## Patentansprüche

1. Verfahren zur drahtlosen Kommunikation durch ein Benutzergerät, UE, das Folgendes beinhaltet:
Feststellen (810), dass eine erste RACH-(Random Access Channel)-Prozedur mit einer Basisstation erfolglos war;
Übertragen (812), nach der Feststellung, dass die erste RACH-Prozedur erfolglos war, einer zweiten Präambel-Nachricht für eine zweite RACH-Prozeudr mit der Basisstation, wobei sich eine zweite Konfiguration einer RAR-(Random Access Response)-Nachricht für die zweite RACH-Prozedur von einer ersten Konfiguration einer RAR-Nachricht für die erste RACH-Prozedur unterscheidet; und
Empfangen (816) der RAR-Nachricht für die zweite RACH-Prozedur auf der Basis der zweiten Konfiguration, wobei das Empfangen der RAR-Nachricht für die zweite RACH-Prozedur auf der Basis der zweiten Konfiguration das Empfangen der RAR-Nachricht für die zweite RACH-Prozedur in einem durch die zweite Konfiguration angegebenen RAR-Fenster beinhaltet, wobei eine Dauer und/oder ein Versatz des RAR-Fensters mit der ersten Konfiguration inkonsistent ist/sind.

2. Verfahren nach Anspruch 1, das ferner Folgendes beinhaltet:
Erhalten mindestens eines Messwerts für mindestens ein von der Basisstation empfangenes Pilotsignal, wobei die erste RACH-Prozedur auf der Basis davon als erfolglos festgestellt wird, dass der mindestens eine Messwert einen Schwellenwert nicht erfüllt.

3. Verfahren nach Anspruch 2, das ferner Folgendes beinhaltet:
Übertragen des mindestens einen Messwerts für das mindestens eine Pilotsignal zu der Basisstation.

4. Verfahren nach Anspruch 1, das ferner Folgendes beinhaltet:
Übertragen einer weiteren Präambel-Nachricht für die erste RACH-Prozedur vor der Feststellung, dass die erste RACH-Prozedur erfolglos war, wobei die erste RACH-Prozedur auf der Basis des Fehlens einer ersten RAR-(Random Access Response)-Nachricht als erfolglos festgestellt wird, die als Reaktion auf die weitere Präambel-Nachricht in einer durch die erste Konfiguration angegebenen Zeitperiode erwartet wird.

5. Verfahren nach Anspruch 1, wobei sich die zweite Konfiguration von der ersten Konfiguration in mindestens einem unterscheidet von:
einem Satz von Parametern für Erkennung und/oder Empfang der RAR-Nachricht, die als Reaktion auf die zweite Präambel-Nachricht für die zweite RACH-Prozedur zu erwarten ist;
einer Größe mindestens eines Teils der RAR-Nachricht; oder
einem Satz von Parametern für Erkennung und/oder Empfang einer vierten Nachricht, die auf die zweite Präambel-Nachricht, die RAR-Nachricht und eine dritte Nachricht in der zweiten RACH-Prozedur folgt.

6. Verfahren nach Anspruch 1, wobei sich ein Satz von Parametern für die zweite Präambel-Nachricht von einem Satz von Parametern für eine erste Präambel-Nachricht in einem Satz von Sequenzen zur Erzeugung der zweiten Präambel-Nachricht und/oder einem Format für die zweite Präambel-Nachricht unterscheidet.

7. Verfahren nach Anspruch 1, wobei sich ein Satz von Parametern für die zweite Präambel-Nachricht von einem Satz von Parametern für eine erste Präambel-Nachricht in einer Übertragungsleistung zur Übertragung der zweiten Präambel-Nachricht und/oder einem Satz von Ereignissen unterscheidet, in denen die zweite Präambel-Nachricht zu übertragen ist.

8. Verfahren nach Anspruch 1, das ferner Folgendes beinhaltet:
Übertragen einer weiteren Präambel-Nachricht auf demselben Strahl wie die zweite Präambel-Nachricht und in einem zweiten Übertragungsereignis, das sich von einem ersten Übertragungsereignis unterscheidet, bei dem die zweite Präambel-Nachricht übertragen wird, wobei
die weitere Präambel-Nachricht die gleiche Präambel wie die zweite Präambel-Nachricht auf der Basis der zweiten Konfiguration für die zweite RACH-Prozedur umfasst.

9. Verfahren nach Anspruch 1, das ferner Folgendes beinhaltet:
Empfangen erster Steuerinformationen zu einem ersten Ressourcensatz in einem ersten Überwachungsereignis für die zweite RACH-Prozedur auf der Basis der zweiten Konfiguration;
Empfangen zweiter Steuerinformationen zu einem zweiten Ressourcensatz in einem zweiten Überwachungsereignis für die zweite RACH-Prozedur auf der Basis der zweiten Konfiguration, wobei sich der erste Ressourcensatz vom zweiten Ressourcensatz unterscheidet oder das erste Überwachungsereignis sich vom zweiten Überwachungsereignis unterscheidet; und
Kombinieren der ersten Steuerinformationen und der zweiten Steuerinformationen für die RAR-Nachricht der zweiten RACH-Prozedur.

10. Verfahren nach Anspruch 1, das ferner Folgendes beinhaltet:
Empfangen mindestens eines Teils der ersten Konfiguration und/oder der zweiten Konfiguration von der Basisstation.

11. Verfahren zur drahtlosen Kommunikation durch eine Basisstation, das Folgendes beinhaltet:
Empfangen (906) einer zweiten Präambel-Nachricht von einem Benutzergerät, UE, für eine zweite RACH-(Random Access Channel)-Prozedur mit einer zweiten Konfiguration, die sich von einer ersten Konfiguration für eine erste RACH-Prozedur unterscheidet;
Feststellen (912), dass die erste RACH-Prozedur mit dem UE erfolglos war; und
Übertragen (916) einer RAR-(Random Access Response)-Nachricht für die zweite RACH-Prozedur auf der Basis der zweiten Konfiguration als Reaktion auf die Feststellung, dass die erste RACH-Prozedur mit dem UE erfolglos war, wobei sich die zweite Konfiguration für die RAR-Nachricht von der ersten Konfiguration für eine RAR-Nachricht für die erste RACH-Prozedur unterscheidet, wobei das Übertragen der RAR-Nachricht das Übertragen der RAR-Nachricht für die zweite RACH-Prozedur in einem durch die zweite Konfiguration angegebenen RAR-Fenster beinhaltet, wobei eine Dauer und/oder ein Versatz des RAR-Fensters mit der ersten Konfiguration inkonsistent ist/sind.

12. Verfahren nach Anspruch 11, das ferner Folgendes beinhaltet:
Empfangen mindestens eines mit mindestens einem übertragenen Pilotsignal assoziierten Messwerts, wobei die erste RACH-Prozedur mit dem UE auf der Basis davon als erfolglos festgestellt wird, dass der mindestens eine Messwert einen Schwellenwert nicht erfüllt.

13. Vorrichtung (1002) zur drahtlosen Kommunikation durch ein Benutzergerät, UE, die Folgendes umfasst:
einen Prozessor;
einen mit dem Prozessor gekoppelten Speicher; und
Befehle, die im Speicher gespeichert sind und die Aufgabe haben, bei Ausführung durch den Prozessor die Vorrichtung zu veranlassen zum:
Feststellen, dass eine erste RACH-(Random Access Channel)-Prozedur mit einer Basisstation erfolglos war;
Übertragen, nach der Feststellung, dass die erste RACH-Prozedur erfolglos war, einer zweiten Präambel-Nachricht für eine zweite RACH-Prozeudr mit der Basisstation, wobei sich eine zweite Konfiguration einer RAR-(Random Access Response)-Nachricht für die zweite RACH-Prozedur von einer ersten Konfiguration einer RAR-Nachricht für die erste RACH-Prozedur unterscheidet; und
Empfangen der RAR-Nachricht für die zweite RACH-Prozedur auf der Basis der zweiten Konfiguration, wobei die Befehle zum Empfangen der RAR-Nachricht für die zweite RACH-Prozedur auf der Basis der zweiten Konfiguration die Vorrichtung zum Empfangen der RAR-Nachricht für die zweite RACH-Prozedur in einem durch die zweite Konfiguration angegebenen RAR-Fenster veranlassen, wobei eine Dauer und/oder ein Versatz des RAR-Fensters mit der ersten Konfiguration inkonsistent ist/sind.

14. Vorrichtung (1102) zur drahtlosen Kommunikation durch eine Basisstation, die Folgendes umfasst:
einen Speicher; und
mindestens einen Prozessor, der mit dem Speicher gekoppelt und konfiguriert ist zum:
Empfangen einer zweiten Präambel-Nachricht von einem Benutzergerät, UE, für eine zweite RACH-(Random Access Channel)-Prozedur mit einer zweiten Konfiguration, die sich von einer ersten Konfiguration für eine erste RACH-Prozedur unterscheidet;
Feststellen, dass die erste RACH-Prozedur mit dem UE erfolglos war; und
Übertragen einer RAR-(Random Access Response)-Nachricht für die zweite RACH-Prozedur auf der Basis der zweiten Konfiguration als Reaktion auf die Feststellung, dass die erste RACH-Prozedur mit dem UE erfolglos war, wobei sich die zweite Konfiguration für die RAR-Nachricht von der ersten Konfiguration für eine RAR-Nachricht für die erste RACH-Prozedur unterscheidet, wobei das Übertragen der RAR-Nachricht das Übertragen der RAR-Nachricht für die zweite RACH-Prozedur in einem durch die zweite Konfiguration angegebenen RAR-Fenster umfasst, wobei eine Dauer und/oder ein Versatz des RAR-Fensters mit der ersten Konfiguration inkonsistent ist/sind.

15. Computerlesbares Speichermedium, auf dem Befehle gespeichert sind, die bei Ausführung einen Prozessor zum Durchführen des Verfahrens nach einem der vorherigen Ansprüche 1 bis 12 veranlassen.

## Revendications

1. Procédé de communication sans fil par un équipement utilisateur, UE, comprenant :
la détermination (810) qu'une première procédure de canal d'accès aléatoire, RACH, avec une station de base échoue ;
la transmission (812), après la détermination que la première procédure de RACH a échoué, d'un second message de préambule d'une seconde procédure de RACH avec la station de base, une seconde configuration d'un message de réponse d'accès aléatoire, RAR, de la seconde procédure de RACH étant différente d'une première configuration d'un message de RAR de la première procédure de RACH ; et
la réception (816) du message de RAR de la seconde procédure de RACH basée sur la seconde configuration, dans lequel la réception du message de RAR de la seconde procédure de RACH basée sur la seconde configuration comprend la réception du message de RAR de la seconde procédure de RACH dans une fenêtre de RAR indiquée par la seconde configuration, au moins une durée et/ou un décalage de la fenêtre de RAR étant incompatibles avec la première configuration.

2. Procédé selon la revendication 1, comprenant en outre :
l'obtention d'au moins une mesure d'au moins un signal pilote reçu de la station de base, dans lequel il est déterminé que la première procédure de RACH a échoué lorsque l'au moins une mesure ne satisfait pas un seuil.

3. Procédé selon la revendication 2, comprenant en outre :
la transmission à la station de base de l'au moins une mesure de l'au moins un signal pilote.

4. Procédé selon la revendication 1, comprenant en outre :
la transmission d'un autre message de préambule de la première procédure de RACH avant la détermination que la première procédure de RACH a échoué, dans lequel il est déterminé que la première procédure de RACH a échoué en l'absence d'un premier message de réponse d'accès aléatoire, RAR, anticipé en réponse à l'autre message de préambule dans une période de temps indiquée par la première configuration.

5. Procédé selon la revendication 1, dans lequel la seconde configuration est différente de la première configuration en terme d'au moins :
un ensemble de paramètres pour au moins la détection et/ou la réception du message de RAR à anticiper en réponse au second message du préambule de la seconde procédure de RACH ;
une taille d'au moins une partie du message de RAR ; ou
un ensemble de paramètres pour au moins la détection et/ou la réception d'un quatrième message qui suit le deuxième message de préambule, le message de RAR et un troisième message dans la seconde procédure de RACH.

6. Procédé selon la revendication 1, dans lequel un ensemble de paramètres pour le deuxième message de préambule est différent d'un ensemble de paramètres pour un premier message de préambule dans au moins un ensemble de séquences pour la génération du deuxième message de préambule et/ou un format du deuxième message de préambule.

7. Procédé selon la revendication 1, dans lequel un ensemble de paramètres pour le deuxième message de préambule est différent d'un ensemble de paramètres pour un premier message de préambule en terme d'au moins une puissance de transmission pour la transmission du deuxième message de préambule et/ou un ensemble d'occasions lors desquelles transmettre le deuxième message de préambule.

8. Procédé selon la revendication 1, comprenant en outre :
la transmission d'un autre message du préambule sur un même faisceau que celui du deuxième message de préambule et dans une deuxième occasion de transmission différente d'une première occasion de transmission lors de laquelle le deuxième message de préambule est transmis, dans lequel
l'autre message de préambule comprend un même préambule que celui du deuxième message de préambule basé sur la seconde configuration de la seconde procédure de RACH.

9. Procédé selon la revendication 1, comprenant en outre :
la réception de premières informations de commande sur un premier ensemble de ressources lors d'une première occasion de surveillance de la seconde procédure de RACH basée sur la seconde configuration ;
la réception de secondes informations de commande sur un second ensemble de ressources lors d'une seconde occasion de surveillance de la seconde procédure de RACH basée sur la seconde configuration, au moins le premier ensemble de ressources étant différent du second ensemble de ressources et/ou la première occasion de surveillance étant différente de la seconde occasion de surveillance ; et
la combinaison des premières informations de commande et des secondes informations de commande du message de RAR de la seconde procédure de RACH.

10. Procédé selon la revendication 1, comprenant en outre :
la réception d'au moins une partie d'au moins la première configuration et/ou la seconde configuration à partir de la station de base.

11. Procédé de communication sans fil par une station de base, comprenant :
la réception (906) d'un second message de préambule à partir d'un équipement utilisateur, UE, pour une seconde procédure d'accès aléatoire, RACH, ayant une seconde configuration différente d'une première configuration d'une première procédure de RACH ;
la détermination (912) que la première procédure de RACH avec l'UE a échoué ; et
la transmission (916) d'un message de réponse d'accès aléatoire, RAR, de la seconde procédure RACH basée sur la seconde configuration en réponse à la détermination que la première procédure de RACH avec l'UE a échoué, dans lequel la seconde configuration du message de RAR est différente de la première configuration d'un message de RAR de la première procédure de RACH, dans lequel la transmission du message de RAR comprend la transmission du message de RAR de la seconde procédure de RACH dans une fenêtre de RAR indiquée par la seconde configuration, au moins une durée et/ou un décalage de la fenêtre de RAR étant incompatible avec la première configuration.

12. Procédé selon la revendication 11, comprenant en outre :
la réception d'au moins une mesure associée à au moins un signal pilote émis, dans lequel il est déterminé que la première procédure de RACH avec l'UE a échoué lorsque l'au moins une mesure ne satisfait pas un seuil.

13. Appareil (1002) de communication sans fil par un équipement utilisateur, UE, comprenant :
un processeur ;
une mémoire couplée au processeur ; et
des instructions stockées dans la mémoire et exploitables, lorsqu'elles sont exécutées par le processeur, pour amener l'appareil à :
déterminer qu'une première procédure de canal d'accès aléatoire, RACH, avec une station de base a échoué ;
transmettre, après qu'il a été déterminé que la première procédure de RACH a échoué, un deuxième message de préambule d'une seconde procédure de RACH avec la station de base, une seconde configuration d'un message de réponse d'accès aléatoire, RAR, de la seconde procédure de RACH étant différente d'une première configuration d'un message de RAR de la première procédure de RACH ; et
recevoir le message de RAR de la seconde procédure de RACH basée sur la seconde configuration, dans lequel la réception du message de RAR de la seconde procédure de RACH basée sur la seconde configuration comprend la réception du message de RAR de la seconde procédure de RACH dans une fenêtre de RAR indiquée par la seconde configuration, au moins une durée et/ou un décalage de la fenêtre de RAR étant incompatibles avec la première configuration.

14. Appareil (1102) de communication sans fil par une station de base, comprenant :
une mémoire ; et
au moins un processeur couplé à la mémoire et configuré pour :
recevoir à partir d'un équipement utilisateur, UE, un second message de préambule d'une seconde procédure de canal d'accès aléatoire, RACH, ayant une seconde configuration différente d'une première configuration d'une première procédure de RACH ;
déterminer que la première procédure de RACH avec l'UE a échoué ; et
transmettre un message de réponse d'accès aléatoire, RAR, de la deuxième procédure de RACH basée sur la deuxième configuration en réponse à la détermination que la première procédure RACH avec l'UE a échoué, dans lequel la seconde configuration du message de RAR est différente de la première configuration d'un message de RAR de la première procédure de RACH, dans lequel la transmission du message de RAR comprend la transmission du message de RAR de la deuxième procédure de RACH dans une fenêtre de RAR indiquée par la seconde configuration, au moins une durée et/ou un décalage de la fenêtre de RAR étant incompatibles avec la première configuration.

15. Support de stockage lisible par ordinateur sur lequel sont stockées des instructions qui, à leur exécution, amènent un processeur à réaliser le procédé selon l'une quelconque des revendications précédentes 1 à 12.
